(19) Europäisches Patentamt / European Patent Office / Office européen des brevets

(11) **EP 4 303 770 A1**

(12) **EUROPEAN PATENT APPLICATION**

(43) Date of publication:
**10.01.2024 Bulletin 2024/02**

(21) Application number: **23182504.3**

(22) Date of filing: **29.06.2023**

(51) International Patent Classification (IPC):
**G06N 3/0464** (2023.01)    **G06N 3/048** (2023.01)
**G06N 3/0495** (2023.01)    **G06N 3/084** (2023.01)

(52) Cooperative Patent Classification (CPC):
**G06N 3/0464; G06N 3/048; G06N 3/0495;**
**G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 GB 202209612**
**30.06.2022 GB 202209616**
**14.11.2022 GB 202216948**
**14.11.2022 GB 202216947**

(71) Applicant: **Imagination Technologies Limited**
**Kings Langley, Hertfordshire WD4 8LZ (GB)**

(72) Inventor: **CSÉFALVAY, Szabolcs**
**Kings Langley, WD4 8LZ (GB)**

(74) Representative: **Slingsby Partners LLP**
**1 Kingsway**
**London WC2B 6AN (GB)**

(54) **IDENTIFYING ONE OR MORE QUANTISATION PARAMETERS FOR QUANTISING VALUES TO BE PROCESSED BY A NEURAL NETWORK**

(57)     A computer-implemented method of identifying one or more quantisation parameters for transforming values to be processed by a Neural Network "NN" for implementing the NN in hardware, the method comprising, in at least one processor: (a) determining an output of a model of the NN in response to training data, the model of the NN comprising one or more quantisation blocks, each of the one or more quantisation blocks being configured to transform one or more sets of values input to a layer of the NN to a respective fixed point number format defined by one or more quantisation parameters prior to the model processing that one or more sets of values in accordance with the layer; (b) determining a cost metric of the NN that is a combination of an error metric and an implementation metric, the implementation metric being representative of an implementation cost of the NN based on the one or more quantisation parameters according to which the one or more sets of values have been transformed, the implementation metric being dependent on, for each of a plurality of layers of the NN: a first contribution representative of an implementation cost of an output from that layer; and a second contribution representative of an implementation cost of an output from a layer preceding that layer; (c) back-propagating a derivative of the cost metric to at least one of the one or more quantisation parameters to generate a gradient of the cost metric for the at least one of the one or more quantisation parameters; and (d) adjusting the at least one of the one or more quantisation parameters based on the gradient for the at least one of the one or more quantisation parameters.

FIG. 5

**Description**

CROSS-REFERENCE TO RELATED APPLICATION

This application claims priority from UK patent application 2209612.7 filed on 30 June 2022, which is herein incorporated by reference in its entirety. This application also claims priority from UK patent application 2216948.6 filed on 14 November 2022, which is herein incorporated by reference in its entirety. This application also claims priority from UK patent application 2209616.8 filed on 30 June 2022, which is herein incorporated by reference in its entirety. This application also claims priority from UK patent application 2216947.8 filed on 14 November 2022, which is herein incorporated by reference in its entirety.

BACKGROUND

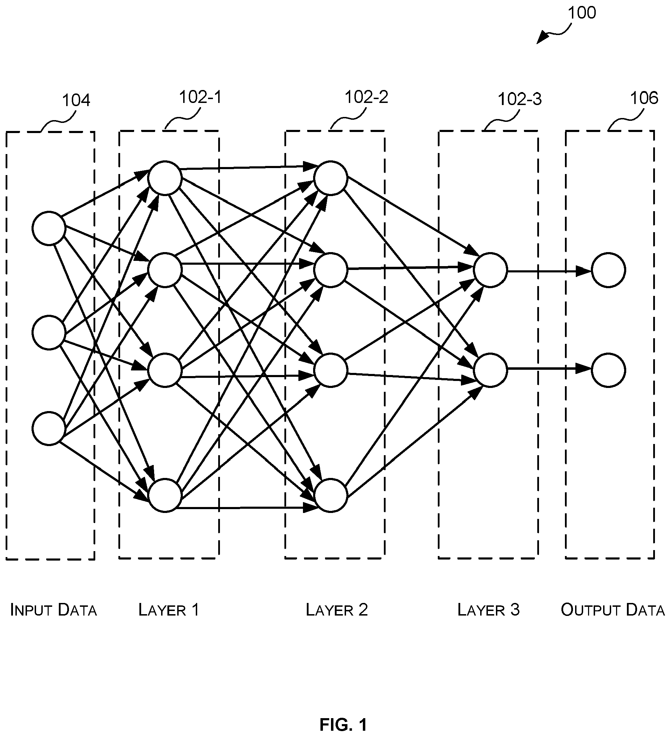

A Neural Network (NN) is a form of artificial network comprising a plurality of interconnected layers (e.g. "layers") that can be used for machine learning applications. In particular, a NN can be used in signal processing applications, including, but not limited to, image processing and computer vision applications. FIG. 1 illustrates an example NN 100 that comprises a plurality of layers 102-1, 102-2, 102-3. Each layer 102-1, 102-2, 102-3 receives input activation data, processes the input activation data in accordance with the layer to produce output data. The output data is either provided to another layer as the input activation data or is output as the final output data of the NN. For example, in the NN 100 FIG. 1 the first layer 102-1 receives the original input activation data 104 to the NN 100 and processes the input activation data in accordance with the first layer 102-1 to produce output data. The output data of the first layer 102-1 becomes the input activation data to the second layer 102-2 which processes the input activation data in accordance with the second layer 102-2 to produce output data. The output data of the second layer 102-2 becomes the input activation data to the third layer 102-3 which processes the input activation data in accordance with the third layer 102-3 to produce output data. The output data of the third layer 102-3 is output as the output data 106 of the NN.

The processing that is performed on the activation data input to a layer depends on the type of layer. For example, each layer of a NN may be one of a plurality of different types. Example NN layer types include, but are not limited to: a convolution layer, an activation layer, a normalisation layer, a pooling layer and a fully connected layer. It will be evident to a person of skill in the art that these are example NN layer types and that this is not an exhaustive list and there may be other NN layer types.

In a convolution layer, activation data input to the layer is convolved with weight data input to that layer. The output of convolving the activation data with the weight data may optionally be combined with one or more offset biases input to the convolution layer.

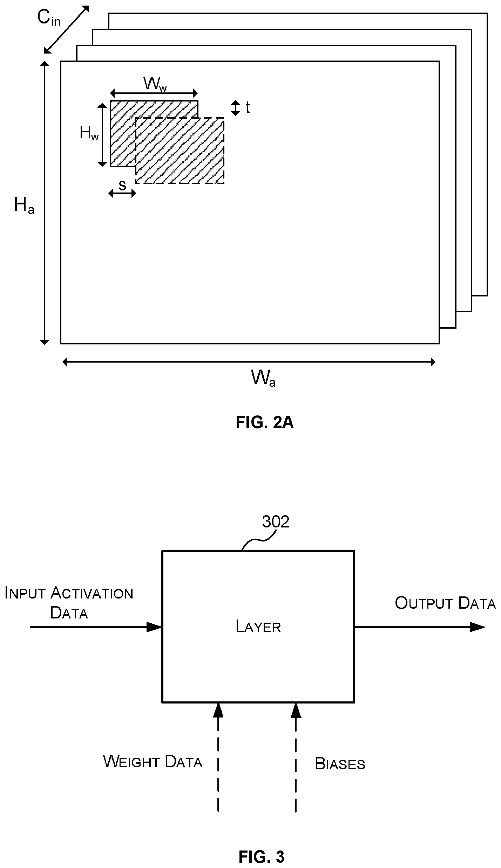

FIG. 2A illustrates an example overview of the format of data utilised in a convolution layer of a NN. The activation data input to a convolution layer comprises a plurality of data values. Referring to FIG. 2A, the activation data input to a convolution layer may have the dimensions $B \times C_{in} \times H_a \times W_a$. In other words, the activation data may be arranged as $C_{in}$ input channels (e.g. sometimes referred to as "data channels"), where each input channel has a spatial dimension $H_a \times W_a$ - where $H_a$ and $W_a$ are, respectively, height and width dimensions. In FIG. 2A, the activation data is shown comprising four input channels (i.e. $C_{in}$ = 4). Each input channel is a set of input data values. Activation data input to a convolution layer may also be defined by a batch size, $B$. The batch size, $B$, is not shown in FIG. 2A, but defines the number of batches of data input to a convolution layer. For example, in image classification applications, the batch size may refer to the number of separate images in the data input to a convolution layer.

Weight data input to a convolution layer includes a plurality of weight values, which may also be referred to as filter weights, coefficients, or weights. Weight data is arranged in one or more input channels and one or more output channels. An output channel may alternatively be referred to as a kernel or a filter. Referring again to FIG. 2A, the weight data may have dimensions $C_{out} \times C_{in} \times H_w \times W_w$. Typically the number of input channels in the weight data corresponds to (e.g. is equal to) the number of input channels in the activation data with which that weight data is to be combined (e.g. in the example shown in FIG. 2A, $G_{in}$ = 4). Each input channel of each filter of the weight data input to a convolution layer has a spatial dimension $H_w \times W_w$ - where $H_w$ and $W_w$ are, respectively, height and width dimensions. Each input channel is a set of weight values. Each output channel is a set of weight values. Each weight value is included in (e.g. comprised by or part of) one input channel and one output channel. The $G_{out}$ dimension (e.g. number of output channels) is not shown in FIG. 2A - but denotes the number of channels in the output data generated by combining the weight data with the activation data. In a convolution layer, weight data can be combined with the activation input data according to a convolution operation across a number of steps in direction $s$ and $t$, as illustrated in FIG. 2A.

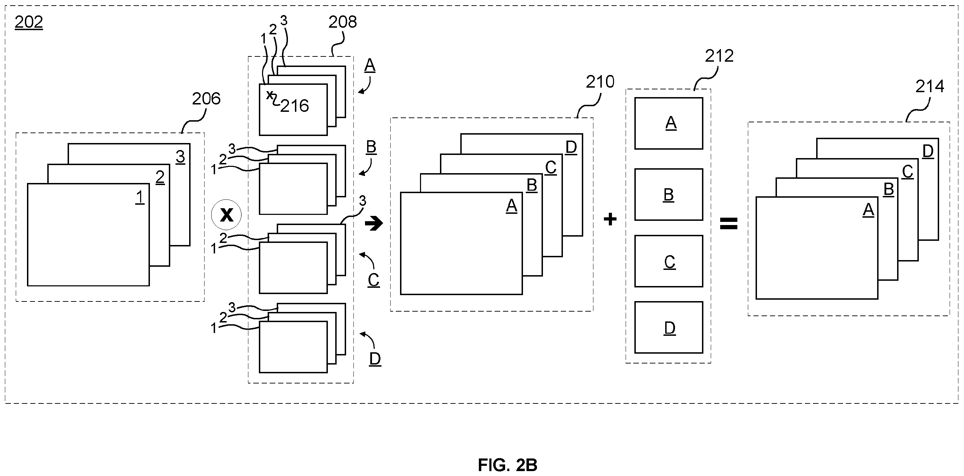

FIG. 2B schematically illustrates an example convolutional layer 202 arranged to combine input activation data 206 with input weight data 208. FIG. 2B also illustrates the use of optional offset biases 212 within layer 202. In FIG. 2B, activation data 206 input to layer 202 is arranged in three input channels 1, 2, 3. The number of input channels in the weight data 208 corresponds to (e.g. is equal to) the number of input channels in the activation data 206 with which that weight data 208 is to be combined. Hence, the weight data 208 is arranged in three input channels 1, 2, 3. The weight data 208 is also arranged in four output channels (e.g. filters) A, B, C, D. The number of output channels in the weight data 208 corresponds to (e.g. is equal to) the number of channels (e.g. data channels) in output data 210. Each weight value is included in (e.g. comprised by or part of) one input channel and one output channel. For example, weight value 216 is included in input channel 1 and output channel A. The input activation data 206 is convolved with input weight data 208 so as to generate output data 210 having four data channels A, B, C, D. The first input channel of each filter in the weight data 208 is convolved with the first input channel of the activation data 206, the second input channel of each filter in the weight data 208 is convolved with the second input channel of the activation data 206, and the third input channel of each filter in the weight data 208 is convolved with the third input channel of the activation data 206. The results of said convolutions with each filter for each input channel of the activation data can be summed (e.g. accumulated) so as to form the output data values for each data channel of output data 210. If convolution layer 202 were not configured to use offset biases, output data 210 would be the output of that convolution layer. In FIG. 2B, the output data 210 is intermediate output data to be combined with offset biases 212. Each of the four output channels A, B, C, D of the weight data 208 input to layer 202 are associated with respective biases A, B, C, D. In the convolution layer, biases A, B, C, D are summed with the respective data channels A, B, C, D of intermediate data 210 so as to generate output data 214 having four data channels A, B, C, D.

An activation layer, which typically, but not necessarily follows a convolution layer, performs one or more activation functions on activation data input to that layer. An activation function takes a single number and performs a certain non-linear mathematical operation on it. In some examples, an activation layer may act as a rectified linear unit (ReLU) by implementing a ReLU function (i.e. $f(x) = max\ (0, x)$) or a Parametric Rectified Linear Unit (PReLU) by implementing a PReLU function.

A normalisation layer is configured to perform a normalizing function, such as a Local Response Normalisation (LRN) Function on activation data input to that layer. A pooling layer, which is typically, but not necessarily inserted between successive convolution layers, performs a pooling function, such as a max or mean function, to summarise subsets of activation data input to that layer. The purpose of a pooling layer is thus to reduce the spatial size of the representation to reduce the number of parameters and computation in the network, and hence to also control overfitting.

A fully connected layer, which typically, but not necessarily follows a plurality of convolution and pooling layers takes a three-dimensional set of input activation data and outputs an $N$ dimensional vector. Where the NN is used for classification $N$ may be the number of classes and each value in the vector may represent the probability of a certain class. The $N$ dimensional vector is generated through a matrix multiplication with weight data, optionally followed by a bias offset. A fully connected layer thus receives activation data, weight data and optionally offset biases. As is known by a person of skill in the art, in an equivalent manner to that described herein with respect to a convolution layer, the activation data input to a fully connected layer can be arranged in one or more input channels, and the weight data input to a fully connected layer can be arranged in one or more input channels and one or more output channels, where each of those output channels are optionally associated with respective offset biases.

Accordingly, as shown in FIG. 3, each layer 302 of a NN receives input activation data and generates output data; and some layers (such as convolution layers and fully-connected layers) also receive weight data and/or biases.

Hardware (e.g. a NN accelerator) for implementing a NN comprises hardware logic that can be configured to process input data to the NN in accordance with the layers of the NN. Specifically, hardware for implementing a NN comprises hardware logic that can be configured to process the activation data input to each layer in accordance with that layer and generate output data for that layer which either becomes the input activation data to another layer or becomes the output of the NN. For example, if a NN comprises a convolution layer followed by an activation layer, hardware logic that can be configured to implement that NN comprises hardware logic that can be configured to perform a convolution on the activation data input to the NN using the weight data and optionally biases input to the convolution layer to produce output data for the convolution layer, and hardware logic that can be configured to apply an activation function to the activation data input to the activation layer (i.e. the output data of the convolution layer) to generate output data for the NN.

As is known to those of skill in the art, for hardware to process a set of values each value is represented in a number format. The two most suitable number formats are fixed point number formats and floating point number formats. As is known to those skilled in the art, a fixed point number format has a fixed number of digits after the radix point (e.g. decimal point or binary point). In contrast, a floating point number format does not have a fixed radix point (i.e. it can "float"). In other words, the radix point can be placed in multiple places within the representation. While representing values input to, and output from, the layers of a NN in a floating point number format may allow more accurate or precise output data to be produced, processing values in a floating point number format in hardware is complex which tends to increase the silicon area, power consumption and complexity of the hardware compared to hardware that processes values in fixed point number formats. Accordingly, hardware for implementing a NN may be configured to represent values input to the layers of a NN in fixed point number formats to reduce the area, power consumption and memory bandwidth of the hardware logic.

Generally the lower the number of bits that can be used to represent values input to, and output from, a layer of a NN the more efficiently the NN can be implemented in hardware. However, typically the fewer bits that are used to represent values input to, and output from, the layers of a NN the less accurate the NN becomes. Accordingly it is desirable to identify fixed point number formats for representing the values of the NN that balance the numbers of bits used to represent the values of the NN and the accuracy of the NN.

The embodiments described below are provided by way of example only and are not limiting of implementations which solve any or all of the disadvantages of methods and systems for identifying fixed point number formats for representing the values of a NN.

SUMMARY

This summary is provided to introduce a selection of concepts that are further described below in the detailed description. This summary is not intended to identify key features or essential features of the claimed subject matter, nor is it intended to be used to limit the scope of the claimed subject matter.

According to a first aspect of the present invention there is provided a computer-implemented method of identifying one or more quantisation parameters for transforming values to be processed by a Neural Network "NN" for implementing the NN in hardware, the method comprising, in at least one processor: (a) determining an output of a model of the NN in response to training data, the model of the NN comprising one or more quantisation blocks, each of the one or more quantisation blocks being configured to transform one or more sets of values input to a layer of the NN to a respective fixed point number format defined by one or more quantisation parameters prior to the model processing that one or more sets of values in accordance with the layer; (b) determining a cost metric of the NN that is a combination of an error metric and an implementation metric, the implementation metric being representative of an implementation cost of the NN based on the one or more quantisation parameters according to which the one or more sets of values have been transformed, the implementation metric being dependent on, for each of a plurality of layers of the NN: a first contribution representative of an implementation cost of an output from that layer; and a second contribution representative of an implementation cost of an output from a layer preceding that layer; (c) back-propagating a derivative of the cost metric to at least one of the one or more quantisation parameters to generate a gradient of the cost metric for the at least one of the one or more quantisation parameters; and (d) adjusting the at least one of the one or more quantisation parameters based on the gradient for the at least one of the one or more quantisation parameters.

Each of the one or more quantisation parameters may include a respective bit width, and the method may further comprise, subsequent to the adjusting step (d), removing a set of values from the model of the NN when the adjusted bit width for that set of values, or a corresponding set of values, is zero.

The first contribution may be formed in dependence on an implementation cost of one or more output channels of weight data input to the layer, and the second contribution may be formed in dependence on an implementation cost of one or more input channels of activation data input to the layer.

Each of the one or more quantisation parameters may include a respective bit width, each of the one or more sets of values may be a channel of values input to the layer, and the method may comprise transforming each of one or more input channels of activation data input to the layer according to a respective bit width and transforming each of one or more output channels of weight data input to the layer according to a respective bit width.

The method may comprise, subsequent to the adjusting step (d), removing from the model of the NN an output channel of weight data input to the preceding layer when the adjusted bit width for a corresponding input channel of the activation data input to the layer is zero.

The first contribution may be formed in dependence on an implementation cost of one or more output channels of weight data input to the layer, and the second contribution may be formed in dependence on an implementation cost of one or more input channels of weight data input to the layer.

Each of the one or more quantisation parameters may include a respective bit width, each of the one or more sets of values may be a channel of values input to the layer, and the method may comprise determining a respective bit width for each of one or more input channels of weight data input to the layer and determining a respective bit width for each of one or more output channels of weight data input to the layer.

A first bit width and a second bit width may be determined, respectively, for each weight value input to the layer, and the method may comprise transforming each weight value input to the layer according to its respective first and/or second bit width, optionally the smaller of its respective first and second bit widths.

The method may comprise, subsequent to the adjusting step (d), removing from the model of the NN an output channel of the weight data input to the preceding layer when the adjusted bit width for a corresponding input channel of the weight data input to the layer is zero.

The first contribution may be formed in dependence on an implementation cost of one or more output channels of weight data input to the layer and an implementation cost of one or more biases input to the layer, and the second contribution may be formed in dependence on an implementation cost of one or more output channels of weight data input to the preceding layer and an implementation cost of one or more biases input to the preceding layer.

Each of the one or more quantisation parameters may include a respective bit width, the one or more sets of values may include one or more output channels of weight data and associated biases input to the layer and one or more output channels of weight data and associated biases input to the preceding layer, and the method may comprise transforming each of the one or more output channels of weight data input to the layer according to a respective bit width, transforming each of the one or more biases input to the layer according to a respective bit width, transforming each of the one or more output channels of weight data input to the preceding layer according to a respective bit width, and transforming each of the one or more biases input to the preceding layer according to a respective bit width.

The same bit width may be used to transform an output channel of weight data and its associated bias.

The method may comprise, subsequent to the adjusting step (d), removing from the model of the NN an output channel of the weight data input to a layer when the adjusted bit widths for that output channel and its associated bias are zero.

The first contribution may be formed in dependence on an implementation cost of one or more output channels of weight data input to the layer, and the second contribution may be formed in dependence on an implementation cost of one or more output channels of weight data input to the preceding layer.

Each of the one or more quantisation parameters may include a respective bit width, the one or more sets of values may include one or more output channels of weight data input to the layer and one or more output channels of weight data input to the preceding layer, and the method may comprise transforming each of the one or more output channels of weight data input to the layer according to a respective bit width, and transforming each of the one or more output channels of weight data input to the preceding layer according to a respective bit width.

The method may comprise, subsequent to the adjusting step (d), removing from the model of the NN an output channel of the weight data input to the preceding layer when the adjusted bit width for that output channel is zero.

The implementation metric may be further dependent on, for each of a plurality of layers of the NN, a further contribution representative of an implementation cost of one or more biases input to the preceding layer.

The method may comprise, subsequent to the adjusting step (d), removing from the model of the NN an output channel of the weight data input to the preceding layer when the adjusted bit width for that output channel and the absolute value of its associated bias is zero.

A layer of the NN may receive activation input data that has been derived from the activation output data of more than one preceding layer, and the implementation metric for that layer may be dependent on: a first contribution representative of an implementation cost of an output from that layer; a second contribution representative of an implementation cost of an output from a first layer preceding that layer; and a third contribution representative of an implementation cost of an output from a second layer preceding that layer.

A layer of the NN may output activation data that is input to a first subsequent layer and to a second subsequent layer, the method may further comprise adding a new layer to the NN between the layer and the first subsequent layer, and the implementation metric for the first subsequent layer may be dependent on: a first contribution representative of an implementation cost of an output from the first subsequent layer; and a second contribution representative of an implementation cost of an output from the new layer.

The new layer may not perform any computation on the output activation data of the layer.

The second contribution may be representative of an implementation cost of an output from a layer immediately preceding that layer.

The method may comprise repeating (a), (b), (c) and (d) with the adjusted at least one of the one or more quantisation parameters.

The method may further comprise outputting the adjusted the at least one of the one or more quantisation parameters for use in configuring hardware logic to implement the NN.

The method may further comprise configuring hardware logic to implement the NN using the adjusted quantisation parameters.

The hardware logic may comprise a neural network accelerator.

According to a second aspect of the invention there is provided a computing-based device configured to identify one or more quantisation parameters for transforming values to be processed by a Neural Network "NN" for implementing the NN in hardware, the computing-based device comprising: at least one processor; and memory coupled to the at least one processor, the memory comprising: computer readable code that when executed by the at least one processor causes the at least one processor to: (a) determine an output of a model of the NN in response to training data, the model of the NN comprising one or more quantisation blocks, each of the one or more quantisation blocks being configured to transform one or more sets of values input to a layer of the NN to a respective fixed point number format defined by one or more quantisation parameters prior to the model processing that one or more sets of values in accordance with the layer; (b) determine a cost metric of the NN that is a combination of an error metric and an implementation metric, the implementation metric being representative of an implementation cost of the NN based on the one or more quantisation parameters according to which the one or more sets of values have been transformed, the implementation metric being dependent on, for each of a plurality of layers of the NN: a first contribution representative of an implementation cost of an output from that layer; and a second contribution representative of an implementation cost of an output from a layer preceding that layer; (c) back-propagate a derivative of the cost metric to at least one of the one or more quantisation parameters to generate a gradient of the cost metric for the at least one of the one or more quantisation parameters; and (d) adjust the at least one of the one or more quantisation parameters based on the gradient for the at least one of the one or more quantisation parameters.

According to a third aspect of the invention there is provided a computer-implemented method of processing data using a Neural Network "NN" implemented in hardware, the NN comprising a plurality of layers, each layer being configured to operate on activation data input to the layer so as to form output data for the layer, said data being arranged in data channels, the method comprising: for an identified channel of output data for a layer, operating on activation data input to the layer such that the output data for the layer does not include the identified channel; and prior to an operation of the NN configured to operate on the output data for the layer, inserting a replacement channel into the output data for the layer in lieu of the identified channel in dependence on information indicative of the structure of the output data for the layer were the identified channel to have been included.

According to a fourth aspect of the invention there is provided a computing-based device configured to process data using a Neural Network "NN" implemented in hardware, the NN comprising a plurality of layers, each layer being configured to operate on activation data input to the layer so as to form output data for the layer, said data being arranged in data channels, the computing-based device comprising at least one processor configured to: for an identified channel of output data for a layer, operate on activation data input to the layer such that the output data for the layer does not include the identified channel; and prior to an operation of the NN configured to operate on the output data for the layer, insert a replacement channel into the output data for the layer in lieu of the identified channel in dependence on information indicative of the structure of the output data for the layer were the identified channel to have been included.

The hardware logic configurable to implement a NN (e.g. NN accelerator) may be embodied in hardware on an integrated circuit. There may be provided a method of manufacturing, at an integrated circuit manufacturing system, the hardware logic configurable to implement a NN (e.g. NN accelerator). There may be provided an integrated circuit definition dataset that, when processed in an integrated circuit manufacturing system, configures the system to manufacture the hardware logic configurable to implement a NN (e.g. NN accelerator). There may be provided a non-transitory computer readable storage medium having stored thereon a computer readable description of hardware logic configurable to implement a NN (e.g. NN accelerator) that, when processed in an integrated circuit manufacturing system, causes the integrated circuit manufacturing system to manufacture an integrated circuit embodying hardware logic configurable to implement a NN (e.g. NN accelerator).

There may be provided an integrated circuit manufacturing system comprising: a non-transitory computer readable storage medium having stored thereon a computer readable description of hardware logic configurable to implement a NN (e.g. NN accelerator); a layout processing system configured to process the computer readable description so as to generate a circuit layout description of an integrated circuit embodying the hardware logic configurable to implement a NN (e.g. NN accelerator); and an integrated circuit generation system configured to manufacture the hardware logic configurable to implement a NN (e.g. NN accelerator) according to the circuit layout description.

There may be provided computer program code for performing a method as described herein. There may be provided non-transitory computer readable storage medium having stored thereon computer readable instructions that, when executed at a computer system, cause the computer system to perform the methods as described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a schematic diagram of an example neural network (NN);

FIG. 2A illustrates an example overview of the format of data utilised in a convolution layer of a NN;

FIG. 2B schematically illustrates an example convolutional layer.

FIG. 3 is a schematic diagram illustrating the data input to, and output from, a layer of a NN;

FIG. 4 is a schematic diagram illustrating an example model of a NN with and without quantisation blocks;

FIG. 5 is a flow diagram of an example method for identifying quantisation parameters for a NN;

FIG. 6 is a schematic diagram illustrating a first example method for generating an error metric;

FIG. 7 is a schematic diagram illustrating a second example method for generating an error metric;

FIG. 8 is a graph illustrating the example gradients of an example cost metric with respect to a bit width;

FIG. 9 is a schematic diagram illustrating the interaction between two adjacent layers of a NN;

FIG. 10A is a schematic diagram illustrating a NN comprising residual layers.

FIG. 10B is a flow diagram of an example method for inserting replacement channels.

FIGS. 10C to E are schematic diagrams illustrating NNs comprising residual layers.

FIG. 11 is a flow diagram of an example method for identifying quantisation parameters and weights of a NN;

FIG. 12 is a schematic diagram illustrating quantisation to an example fixed point number format;

FIG. 13 is a block diagram of an example NN accelerator;

FIG. 14 is a block diagram of an example computing-based device;

FIG. 15 is a block diagram of an example computer system in which a NN accelerator may be implemented; and

FIG. 16 is a block diagram of an example integrated circuit manufacturing system for generating an integrated circuit embodying a NN accelerator as described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.
Since the number of bits to efficiently represent a set of values is based on the range of values in the set, a NN can be implemented efficiently without significantly reducing the accuracy thereof by dividing the values input to the NN into sets and selecting fixed point number formats on a per set basis. Since values input to the same layer tend to be related, each set may be all or a portion of a particular type of input to a layer. For example, each set may be all or a portion of the input activation data values of a layer; all or a portion of the input weight data of a layer; or all or a portion of the biases of a layer. Whether or not the sets comprise all or only a portion of a particular type of input to a layer may depend on the hardware that is to implement the NN. For example, some hardware for implementing a NN may only support a single fixed point number format per input type per layer, whereas other hardware for implementing a NN may support multiple fixed point number formats per input type per layer.
Each fixed point number format is defined by one or more quantisation parameters. A common fixed point number format is the Q format, which specifies a predetermined number of integer bits $a$ and fractional bits $b$. Accordingly, a number can be represented as $Qa.b$ which requires a total of $a + b + 1$ bits (including the sign bit). Example Q formats are illustrated in Table 1 below.

**Table 1**

| Q Format | Description | Example |
|---|---|---|
| Q4.4 | 4 integer bits and 4 fractional bits | $0110.1110_2$ |
| Q0.8 | 0 integer bits and 8 fractional bits | $.01101110_2$ |

Where the Q format is used to represent values of a NN the quantisation parameters may comprise, for each fixed point number format, the number of integer bits $a$ and the number of fractional bits $b$.

In other cases, instead of using the Q format to represent values input to the layers of a NN, fixed point number formats defined by a fixed integer exponent $exp$ and a $b$-bit mantissa $m$ such that a value $z$ is equal to $z = 2^{exp}m$ may be used. In some cases, the mantissa $m$ may be represented in two's complement format. However, in other cases other signed or unsigned integer formats may be used. In these cases the exponent $exp$ and the number $b$ of mantissa bits only needs to be stored once for a set of values represented in that format. Where such a fixed point number format is used to represent values of a NN the quantisation parameters may comprise, for each fixed point number format, a mantissa bit length $\&$ (which may also be referred to herein as a bit width or bit length), and an exponent $exp$.

In yet other cases, the 8-bit asymmetric fixed point (Q8A) format may be used to represent values input to the layers of a NN. This format comprises a minimum representable number $r_{min}$, a maximum representable number $r_{max}$, a zero point $z$, and an 8-bit number for each value which identifies a linear interpolation factor between the minimum and maximum numbers. In other cases, a variant of the Q8A format may be used in which the number of bits used to store the interpolation factor is variable (e.g. the number of bits used to store the interpolation factor may be one of a plurality of possible integers). The floating point value $d_{float}$ can be constructed from such a format as shown in Equation (1) where $b$ is the number of bits used by the quantised representation and $z$ is the quantised zero point which will always map exactly back to 0.f. Where such a fixed point number format is used to represent values of a NN the quantisation parameters may comprise, for each fixed point number format, the maximum representable number or value $r_{max}$, the minimum representable number or value $r_{min}$, the quantised zero point $z$, and optionally, a mantissa bit length $\&$ (i.e. when the bit length is not fixed at 8).

$$d_{float} = \frac{(r_{max} - r_{min})(d_{Q8A} - z)}{2^b - 1} \qquad (1)$$

While a fixed point number format (and more specifically the quantisation parameters thereof) for efficiently representing a set of values may be determined simply from the range of values in the set, since the layers of a NN are interconnected a better trade-off between the number of bits used for representing the values of the NN and the performance (e.g. accuracy) of the NN may be achieved by taking into account the interaction between layers when selecting the fixed point number formats (and more specifically the quantisation parameters thereof) for representing the values of a NN.

Accordingly, described herein are methods and systems for identifying fixed point number formats, and specifically the quantisation parameters (e.g. exponents and mantissa bit lengths) thereof, for representing the values of a NN using back-propagation. As is known to those of skill in the art, back-propagation is a technique that may be used to train a NN. Training a NN comprises identifying the appropriate weights to configure the NN to perform a specific function.

Specifically, to train a NN via back-propagation, a model of the NN is configured to use a particular set of weights, training data is then applied to the model, and the output of the model in response to the training data is recorded. A differentiable error metric is then calculated from the recorded output which quantitatively indicates the performance of the NN using that particular set of weights. In some cases, the error metric may be the distance (e.g. mean squared distance) between the recorded output and the expected output for that training data. However, this is only an example and any suitable error metric may be used. The derivative of the error metric is then back-propagated to the weights of the NN to produce gradients/derivatives of the error metric with respect to each weight. The weights are then adjusted based on the gradients so as to reduce the error metric. This process may be repeated until the error metric converges.

NNs are often trained using a model of the NN in which the values of the NN (e.g. activation data, weight data and biases) are represented and processed in floating point number formats. A NN that uses floating point number formats to represent and process the values of the NN is referred to herein as a floating point NN. A model of a floating point NN may be referred to herein as a floating point model of the NN. However, as described above, hardware (e.g. a NN accelerator) for implementing a NN may use fixed point number formats to represent the values of the NN (e.g. activation data, weight data and biases) to reduce the size and increase the efficiency of the hardware. A NN that uses fixed point number formats for at least some of the values thereof is referred to herein as a fixed point NN. To train a fixed point NN, quantisation blocks may be added to the floating point model of the NN which quantise (or simulate quantisation of) the values of the NN to predetermined fixed point number formats prior to processing the values. This allows the quantisation of the values to fixed point number formats to be taken into account when training the NN. A model of a NN that comprises one or more quantisation blocks to quantise (or simulate quantisation of) one or more sets of input values is referred to herein as a quantising model of the NN.

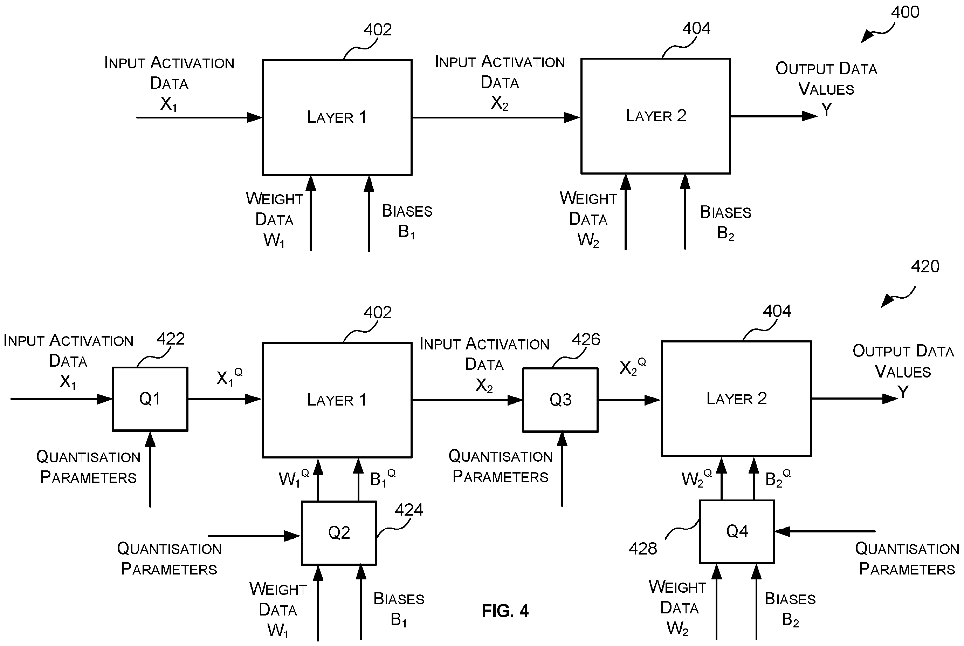

For example, FIG. 4 shows an example NN 400 that comprises a first layer 402 which processes a first set of input activation data values $X_1$ in accordance with a first set of weight data $W$, and a first set of biases $B_1$; and a second

layer 404 which processes a second set of input activation data values $X_2$ (the output of the first layer 402) in accordance with a second set of weight data $W_2$ and a second set of biases $B_2$. A floating point model of such a NN 400 may be augmented with one or more quantisation blocks that each quantise (or simulate quantisation of) one or more sets of input values to a layer of the NN so that the quantisation of the values of the NN may be taken into account in training the NN. For example, as shown in FIG. 4 a quantising model 420 of the NN may be generated from a floating point model of the NN by adding a first quantisation block 422 that quantises

(or simulates quantisation of) the first set of input activation data values $X_1$ to one or more fixed point number formats defined by respective sets of quantisation parameters, a second quantisation block 424 that quantises (or simulates quantisation of) the first set of weight data W, and first set of biases B, to one or more fixed point number formats defined by respective sets of quantisation parameters, a third quantisation block 426 that quantises (or simulates quantisation of) the second set of input activation data values $X_2$ to one or more fixed point number formats defined by respective sets of quantisation parameters and a fourth quantisation block 428 that quantises (or simulates quantisation of) the second set of weight data $W_2$ and second set of biases $B_2$ to one or more fixed point number formats defined by respective quantisation parameters.

Adding quantisation blocks to the floating point model of the NN allows the quantisation parameters (e.g. mantissa bit lengths and exponents) themselves to be determined via back-propagation so long as the quantisation parameters are differentiable. Specifically, this can be achieved by making the quantisation parameters (e.g. bit lengths *b* and exponents *exp)* learnable and generating a cost metric based on the error metric and the implementation cost of the NN. The derivative of the cost metric can then be back-propagated to the quantisation parameters (e.g. bit depths *b* and exponents *exp)* to produce gradients/derivatives of the cost metric with respect to each of the quantisation parameters. Each gradient indicates whether the corresponding quantisation parameter (e.g. bit depth or exponent) should be higher or lower than it is now to reduce the cost metric. The quantisation parameters may then be adjusted based on the gradients to minimise the cost metric. Similar to training a NN (i.e. identifying the weights of a NN), this process may be repeated until the cost metric converges.

Testing has shown that identifying the quantisation parameters of a NN using back-propagation can generate fixed point NNs with a good level of performance (e.g. with an accuracy above a predetermined threshold) yet with a minimum number of bits, which allows the NN to be implemented efficiently in hardware.

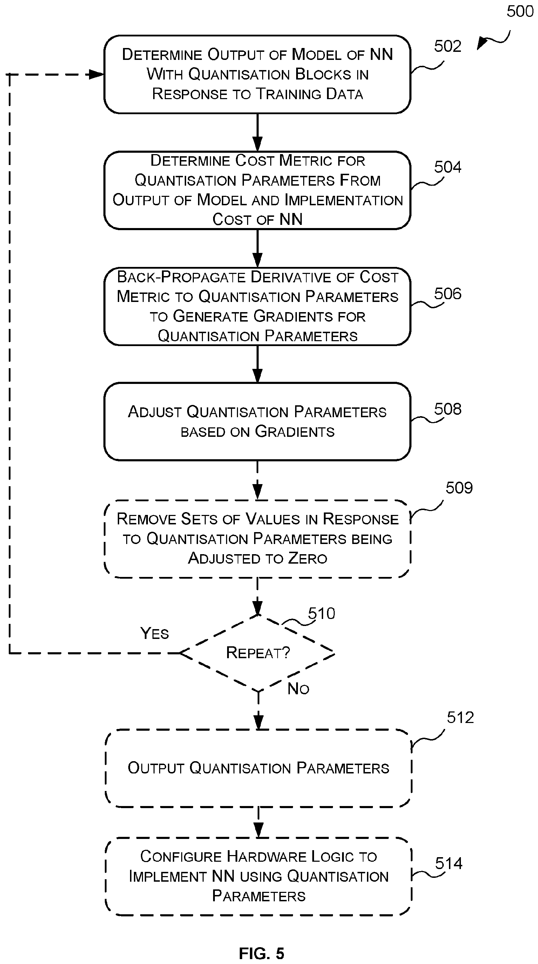

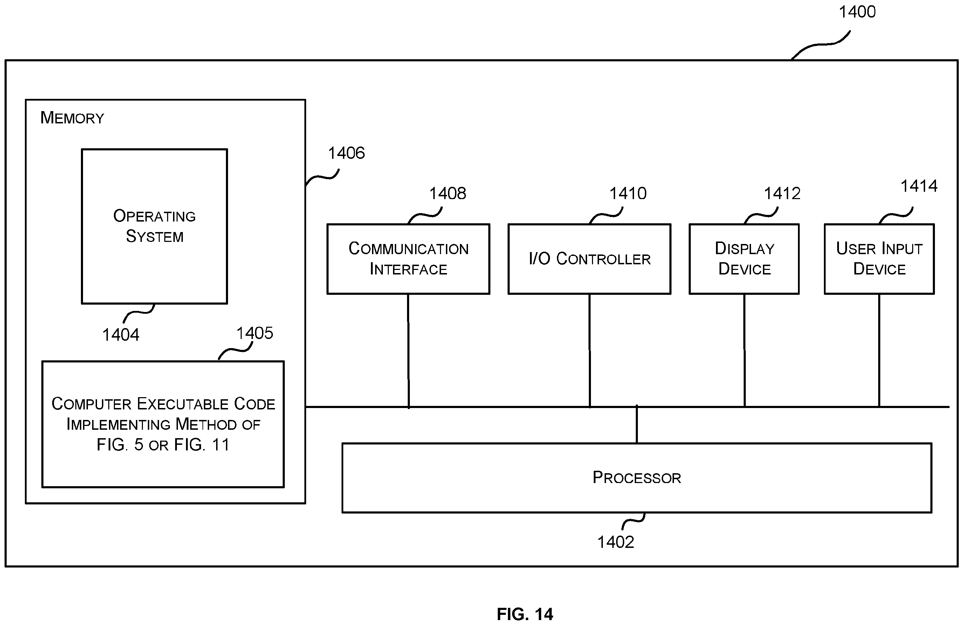

Reference is now made to FIG. 5 which illustrates an example method 500 for identifying quantisation parameters of a NN via back-propagation. In an example, the method 500 of FIG. 5 can be used for identifying quantisation parameters of a Deep Neural Network (DNN) - which is a type of NN - via back-propagation. The method 500 may be implemented by a computing-based device such as the computing-based device 1400 described below with respect to FIG. 14. For example, there may be computer readable storage medium having stored thereon computer readable instructions that, when executed at a computing-based device, cause the computing-based device to perform the method 500 of FIG. 5.

The method begins at block 502 where the output of a quantising model of the NN in response to training data is determined. A model of a NN is a representation of the NN that can be used to determine the output of the NN in response to input data. The model may be, for example, a software implementation of the NN or a hardware implementation of the NN. Determining the output of a model of the NN in response to training data comprises passing the training data through the layers of the NN and obtaining the output thereof. This may be referred to as a forward-pass of the NN because the calculation flow is going from the input through the NN to the output. The model may be configured to use a trained set of weights (e.g. a set of weights obtained through training a floating point model of the NN).

A quantising model of the NN is a model of the NN that comprises one or more quantisation blocks (e.g. as shown in FIG. 4). Each quantisation block is configured to transform (e.g. quantise or simulate quantisation of) one or more sets of values input to a layer of the NN prior to the model processing that one or more sets of values in accordance with the layer. The quantisation blocks allow the effect of quantising one or more sets of values of the NN on the output of the NN to be measured.

As is known to those of skill in the art, quantisation is the process of converting a number in a higher precision number format to a lower precision number format. Quantising a number in a higher precision format to a lower precision format generally comprises selecting one of the representable numbers in the lower precision format to represent the number in the higher precision format based on a particular rounding mode (such as, but not limited to round to nearest (RTN), round to zero (RTZ), round to nearest with ties to even (RTE), round to positive infinity (RTP), and round to negative infinity (RTNI)).

For example, Equation (2) sets out an example formula for quantising a value *z* in a first number format into a value $z^q$ in a second, lower precision, number format where $X_{max}$ is the highest representable number in the second number format, $X_{min}$ is the lowest representable number in the second number format, and *RND(z)* is a rounding function:

$$z^q = \begin{cases} X_{max}, & if \ z \geq X_{max} \\ X_{min}, & if \ z \leq X_{min} \\ 0, & if \ z = 0 \\ RND(z), & otherwise \end{cases} \qquad (2)$$

The formula set out in Equation (2) quantises a value in a first number format to one of the representable numbers in the second number format selected based on the rounding mode RND (e.g. RTN, RTZ, RTE, RTP or RTNI).

In the examples described herein, the lower precision format is a fixed point number format and the higher precision format may be a floating point number format or a fixed point number format. In other words, each quantisation block is configured to receive one or more set of values in an input number format, which may be a floating point number format or a fixed point number format, and quantise (or simulate quantisation of) those sets of values to one or more, lower precision, output fixed point number formats.

As described above with respect to FIG. 3, each layer of a NN receives input activation data and produces output data. A layer may also receive weight data and/or biases. Accordingly, a set of values transformed by a quantisation block may be all or a subset of the activation data values input to a layer, all or a subset of the weight data values input to a layer, or all or a subset of the biases input to a layer. By way of example, any one or more of the following may be considered to be a set of values to be transformed by a quantisation block: an input channel of activation data input to a layer, an input channel of weight data input to a layer, an output channel of weight data input to a layer, biases input to a layer and/or an output channel of weight data input to a layer and its associated bias.

Each quantisation block may be configured to transform (e.g. quantise or simulate quantisation of) different subsets of values of a particular input type to different output fixed point number formats. For example, a quantisation block may transform a first subset of the input activation values to a layer to a first output fixed point number format and transform a second subset of the input activation values to that layer to a second, different, output fixed point number format. In other words, in an example, one quantisation block may transform each of the input channels of activation data input to a layer, each of those input channels being transformed to respective (e.g. potentially different) output fixed point number formats. In other cases, there may be multiple quantisation blocks per input type. For example, there may be a plurality of quantisation blocks for transforming the activation data of a layer wherein each of these quantisation blocks transform only a portion (or only a subset) of the activation data values of the layer. In other words, in an example, each quantisation block may transform one input channel of activation data to an output fixed point number format.

Each output fixed point number format used by a quantisation block is defined by one or more quantisation parameters. The quantisation parameters that define a particular output fixed point number format may be based on the particular fixed point number formats supported by the hardware logic that is to implement the NN. For example, each fixed point number format may be defined by an exponent $exp$ and a mantissa bit length $b$.

In the first iteration of block 502 the quantisation parameters that are used by the quantisation blocks may be randomly selected from the supported quantisation parameters or they may be selected in another manner. For example, in some cases the mantissa bit lengths may be set to a value higher than the highest bit length supported by the hardware which is to be used to implement the NN so that information is not lost by the initial quantisation. For example, where the hardware that is to be used to implement the NN supports a maximum bit length of 16 bits then the mantissa bit lengths may be initially set to a value higher than 16 (e.g. 20).

Once the output of the model of the NN in response to training data has been determined the method 500 proceeds to block 504.

At block 504, a cost metric $cm$ for the set of quantisation parameters used in block 502 is determined from (i) the output of the quantising model of the NN in response to the training data and (ii) the implementation cost of the NN based on the set of quantisation parameters. The cost metric $cm$ is a quantitative measurement of the quality of the set of quantisation parameters. In the examples described herein, the quality of a set of quantisation parameters is based on the error of the NN when the set of quantisation parameters are used to quantise (or simulate quantisation of) the values of the NN, and the implementation cost (e.g. expressed in a number of bits or bytes) of the NN when that set of quantisation parameters are used. Accordingly, in some cases the cost metric $cm$ may be a combination of an error metric $em$ and an implementation metric $sm$. The implementation metric may be referred to as an implementation cost metric or a size metric. In some examples, the cost metric $cm$ may be calculated as the weighted sum of the error metric $em$ and the implementation metric $sm$ as shown in Equation (3) wherein $\alpha$ and $\beta$ are the weights applied to the error metric $em$ and the implementation metric $sm$ respectively. The weights $\alpha$ and $\beta$ are selected to achieve a certain balance between the error and implementation metrics. In other words the weights are used to indicate which is more important - error or implementation cost. For example, if the implementation metric weight $\beta$ is small the cost metric will be dominated by the error metric leading to a more accurate network. In contrast, if the implementation metric weight $\beta$ is large the cost metric will be dominated by the implementation metric leading to a smaller network with lower accuracy. However, in other examples the error metric $em$ and the implementation metric $sm$ may be combined in another suitable manner to generate the cost metric *cm*.

$$cm = (\alpha * em) + (\beta * sm) \qquad (3)$$

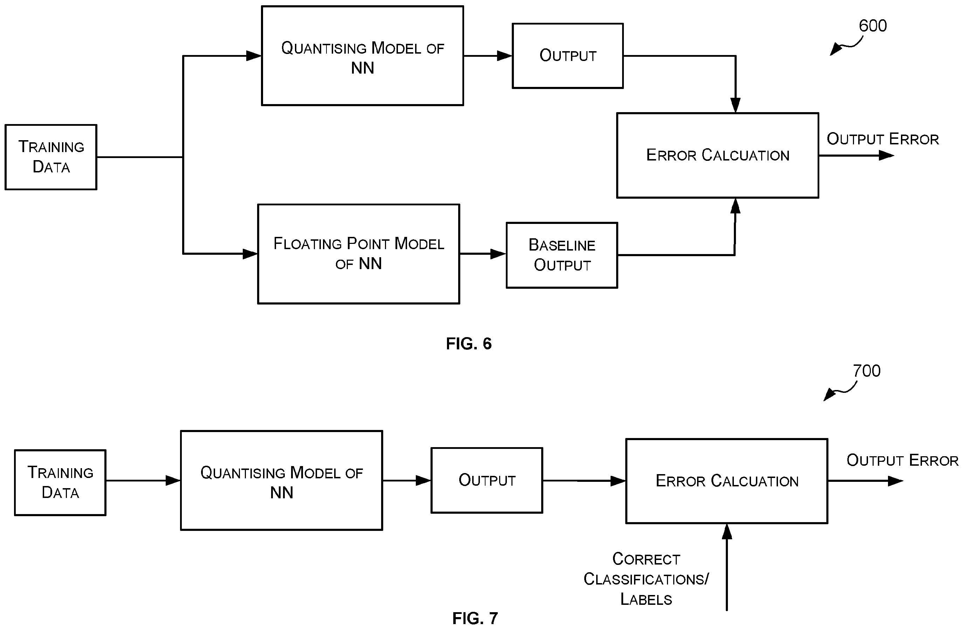

The error metric *em* can be any metric that provides a quantitative measure of the error in the output of the quantising model of the NN when a particular set of quantisation parameters are used to quantise (or simulate quantisation of) the values of the NN. In some examples, the error in the output of the quantising model of the NN in response to the training data may be calculated as the error in the output with respect to a baseline output. In some cases, as shown at 600 of FIG. 6, the baseline output may be the output of a floating point model of the NN (i.e. a model of the NN in which the values of the NN are in floating point number formats). Since values can generally be represented more accurately, or more precisely, in a floating point number format a floating point model of the NN represents a model of the NN that will produce the most accurate output. Accordingly, the output generated by a floating point model of the NN may be used as the benchmark or baseline output from which to gauge the accuracy of output data generated by the quantising model of the NN.

In other examples, as shown at 700 of FIG. 7, the baseline output may be the ground truth output for the training data. In these examples, the error in the output of the quantising model of the NN may indicate the accuracy of the output of the quantising model of the NN relative to known results for the training data.

The error between the baseline output and the output of the quantising model of the NN may be determined in any suitable manner. Where the NN is a classification network the output of the NN may be a set of logits. As is known to those of skill in the art, a classification network determines the probability that the input data falls into each of a plurality of classes. A classification NN generally outputs a data vector with one element corresponding to each class, and each of these elements is called a logit. For example, a classification network with 1425 potential class labels may output a vector of 1425 logits. In these cases, the error between the baseline output and the output of the quantising model of the NN may be calculated as the L1 distance between corresponding logits. This is illustrated in Equation (4) where *r* is the set of logits in the baseline output and *r'* is the set of logits in the output of the quantising model of the NN:

$$em = \sum_i |r_i - r'_i| \qquad (4)$$

In other examples, the output of a classification NN may instead be the output of a SoftMax function applied to the logits. As is known to those of skill in the art, the SoftMax function is a transformation applied to the logits output by a NN so that the values associated with each classification add up to 1. This allows the output of the SoftMax function to represent a probability distribution over the classes. The output of the SoftMax function may be referred to as the SoftMax normalised logits. The SoftMax function can be expressed as shown in Equation (5) (with or without an additional temperature parameter *T*) where $s_i$ is the softmax output for class *i*, $r_i$ is the logit for class *i*, and *i* and *j* are vector indices corresponding to the classes. Increasing the temperature *T* makes the SoftMax values "softer" (i.e. less saturation to 0 and 1) and thereby easier to train against.

$$s_i(r; T) = \frac{e^{r_i/T}}{\sum_j e^{r_j/T}} \qquad (5)$$

Where the output of a classification NN is a set of SoftMax normalised logits the error between the baseline output and the output of the quantising model of the NN may be calculated as the L1 distance between the outputs of the SoftMax function.

In other cases, the error in the output of the quantising model of the NN in response to the training data may be the Top-N classification accuracy wherein N is an integer greater than or equal to one. As is known to those of skill in the art, the Top-N classification accuracy is a measure of how often the correct classification is in the top N classifications output by the NN. Popular Top-N classification accuracies are Top-1 and Top-5 classification accuracies, but any Top-N classification accuracy may be used.

In general, a NN will be trained (i.e. the weights thereof selected) in accordance with an error metric and it is advantageous to use the same error metric used in training to select the quantisation parameters.

The implementation metric *sm* is a metric that provides a quantitative measure of the hardware-related costs of implementing the NN when a particular set of quantisation parameters are used. The implementation metric is representative of a cost of implementing of the NN based on the one or more quantisation parameters according to which the one or more sets of values are transformed in block 502. The implementation metric may be referred to as an implementation cost metric or a size metric. The hardware-related costs of implementing the NN may comprise, for example, the cost of transferring data from the memory to an NNA chip. The implementation metric may reflect some measure of the performance of the NN when a particular set of quantisation parameters are used, for example: how fast that NN runs on certain hardware; or how much power that NN consumes on certain hardware. The implementation metric may be hardware specific (e.g. specific to the NN accelerator at which the NN is to be implemented), for example, so that it can be tailored to reflect the properties of that hardware in order that the NN training effectively optimises the set of quantisation parameters for that hardware. The implementation metric may be expressed, for example, in physical units (e.g. Joules) or in information unit (e.g. bits or bytes).

In a simple approach, the implementation metric could be dependent on the total number of bits or bytes used to represent certain sets of values (e.g. sets of input activation data, weight data or biases) of each of the layers of the NN. That said, the inventor has found that this simple approach can be improved upon by taking account of the interaction between layers (e.g. in particular, adjacent layers) when used in a method for identifying one or more quantisation parameters as described herein. For example, consider an illustrative network consisting of a first layer configured to output 5 data channels (e.g. using weight data arranged in 5 output channels) to a second layer configured to output 1000 data channels (e.g. using weight data arranged in 1000 output channels). A simple approach to assessing the implementation cost of that network may be to assess the sum of the size (e.g. in number of bits) of the output channels of weight data input to each layer. That is, the implementation cost of each layer may be assessed according to the sum of the number of bits used to encode each of the output channels of weight data input to that layer, and the implementation cost of the network may be represented by a sum of the implementation costs of the layers. Assuming that each output weight channel comprises a comparable number of weight values, this simple approach may determine that the first layer (using weight data arranged in 5 output channels) is relatively small, and the second layer (using weight data arranged in 1000 output channels) is relatively large. As such, a training method based on such an implementation metric may "target" the output channels of weight data input to the second layer (e.g. on the basis that the second layer appears to be larger, and so reducing its size would apparently make a larger difference to the implementation cost of the NN). However, this simple approach does not consider that each of the 5 channels of output data generated by the first layer will be convolved with 1000 output channels of the weight data input to the second layer. Hence, reducing the implementation cost of any one of those 5 channels of output data generated by the first layer (e.g. by reducing the size of the output channels of weight data input to the first layer) could have a significant effect on the overall inference time of the NN. By way of an extreme example to clearly illustrate this concept, reducing the size of any one of the 5 output channels of weight data input to the first layer to zero bits, thereby enabling the corresponding channel of output data to be omitted from the NN, would reduce the amount of computation to be performed in the second layer by 1000 multiply-add operations. The simple approach to assessing the implementation cost of a network does not consider this type of interaction between the layers. It is to be understood that similar shortcomings would be experienced were alternative simple approaches to be used in which the implementation cost of a network is assessed according to: the size (e.g. in number of bits) of the output channels of data generated by each layer; the size (e.g. in number of bits) of the input channels of weight data input to each layer; or the size (e.g. in number of bits) of the input channels of activation data input to each layer.

According to the principles described herein, the implementation metric is dependent on, for each of a plurality of layers of the NN, a first contribution representative of an implementation cost of an output from that layer (e.g. a number of output channels for that layer), and a second contribution representative of an implementation cost of an output from a layer preceding that layer (e.g. a number of input channels for layer for which an implementation cost is being determined). That is, each layer of the plurality of layers may provide respective first and second contributions. The implementation metric may be a sum of the implementation costs of each of the plurality of layers determined in dependence on said first and second contributions. In this way, the interaction between layers (e.g. in particular, adjacent layers) can be better accounted for. A training method based on such an implementation metric that better considers the interaction between layers can better "target" the sets of values that have a greater impact on the implementation cost of the NN - e.g. those sets of values that are involved in greater numbers of multiply-add operations.

It is to be understood that the implementation cost of every layer of a NN need not be determined in this way for inclusion in the implementation metric. For example, the implementation cost of the last layer of a NN need not be dependent on a first contribution representative of an implementation cost of an output from that layer, and/or the implementation cost of the first layer of a NN need not be dependent on a second contribution representative of an implementation cost of an output from a layer preceding that layer. Alternatively, or additionally, the implementation metric may include first and second contributions from only the layers of the NN that receive weight data and/or biases as inputs (e.g. convolution and/or fully connected layers). That is, the plurality of layers may include a plurality of convolution and/or fully connected layers. In other words, the implementation metric may not include contributions from layers that do not receive weight data and/or biases as inputs (e.g. activation layers, normalisation layers, or pooling layers).

In examples, the layer preceding the layer for which an implementation cost is being determined may be the layer immediately preceding that layer (e.g. the layer which outputs the data that is the input activation data for the layer for which the implementation cost is being determined); may be the previous layer in the NN that also received weight data and/or biases as inputs (e.g. the previous convolution and/or fully connected layer of the NN); or may be the previous layer in the NN of the same type as the layer for which the implementation cost is being determined (e.g. if the layer for which the implementation cost is being determined is a convolution layer, the previous convolution layer in the NN). In other words, the layer for which the implementation cost is being determined and the layer preceding that layer may be separated by other types of layer (e.g. activation layers, normalisation layers, or pooling layers) and/or intermediate operations such as summation blocks between the layer and the layer preceding that layer. Put another way, the layer for which the implementation cost is being determined and the layer preceding that layer may be separated by other types of layer that do not change the number of data channels in the input activation data received by the layer, such that the input activation data of the layer for which the implementation cost is being determined and the output data of the layer preceding that layer are arranged in the same number of data channels. In other words, the layer for which the implementation cost is being determined and the layer preceding that layer may be separated by other types of layer that process data channels independently (e.g. do not cause "mixing" of data values between input and output data channels).

In the following, nine specific examples are provided in which the implementation metric is dependent on first and second contributions for each of a plurality of layers as described herein. It is to be understood that these specific implementations are provided by way of example only, and that the principles described herein could be implemented differently.

*Example 1*

In Example 1, the first contribution is formed in dependence on an implementation cost of one or more output channels of weight data input to the layer, and the second contribution is formed in dependence on an implementation cost of one or more input channels of activation data input to the layer. As described herein, the number of output channels in the weight data for a layer corresponds to (e.g. is equal to) the number of channels (e.g. data channels) in the output data for that layer. Hence, the implementation cost of one or more output channels of weight data input to a layer can be taken as being representative of an implementation cost of an output from that layer. As described herein, the activation data input to a layer is (or is derived directly from, e.g. in the case of intermediate operations such as summation blocks between layers) the output data from a layer preceding that layer. Hence, the implementation cost of one or more input channels of activation data input to the layer can be taken as being representative of an implementation cost of an output from a layer preceding that layer.

In Example 1, in block 502 of FIG. 5, each of the one or more sets of values transformed by the one or more quantisation blocks is a channel of values input to the layer. Each of one or more quantisation parameters according to which the one or more channels of values are transformed includes a respective bit width. The one or more quantisation blocks are configured to transform each of one or more of input channels i of activation data input to the layer according to a respective bit width $b_i^a$ (where the bit widths $b_i^a$ can be represented as a vector $\{b_i^a\}_{i=1}^I$ ) and transform each of one or more of output channels *j* of weight data input to the layer according to a respective bit width $b_j^w$ (where the bit widths $b_j^w$ can be represented as a vector $\{b_j^w\}_{j=1}^O$ ). More specifically, the input activation data *x* and input weight data w can be transformed in accordance with Equations (6) and (7), where the respective bit widths $b_i^a$ and exponents $e_i^a$ for the activation data are encoded in vectors with *I* elements each, respective bit widths $b_j^w$ and exponents $e_j^w$ for the weight data are encoded in vectors with *O* elements each. That is, $b_i^a$ and $e_i^a$ quantize each input channel of the activation data *x* with a separate pair of quantisation parameters, and $b_j^w$ and $e_j^w$ quantize each output channel of the weight data *w* with a separate pair of quantisation parameters. Examples of suitable quantisation functions, *q,* are described below (e.g. with reference to Equation (37A), (37B) or (37C)).

$$x' = q(x, b_i^a, e_i^a) \qquad (6)$$

$$w' = q(w, b_j^w, e_j^w) \qquad (7)$$

In Example 1, in block 504 of FIG. 5, the implementation cost of a layer $s_l$ can be defined in accordance with Equation (8), which is a differentiable function. In Equation (8), the first contribution is dependent on the number of input channels $i$ of the activation data being transformed in accordance with a more than zero bit width $b_i^a$, multiplied by a sum of the bit widths $b_j^w$ according to which each of one or more output channels $j$ of weight data are transformed. The second contribution is dependent on the number of output channels $j$ of weight data being transformed in accordance with a more than zero bit width $b_j^w$, multiplied by a sum of the bit widths $b_i^a$ according to which each of the one or more input channels $i$ of the activation data are transformed. In Equation (8), the terms $\max\left(0, b_j^w\right)$ and $\max(0, b_i^a)$ can be used to ensure that the bit widths $b_j^w$ and $b_i^a$, respectively, are not adjusted below zero in the subsequent steps of the method, as described in further detail below. The implementation cost of a layer, $s_l$, is determined in dependence on a sum of the first contribution and the second contribution, that sum being multiplied by a product of the height $H_w$ and width $W_w$ dimensions of the weight data input to the layer. The implementation metric for the NN can be formed by summing the implementation costs of a plurality of layers of the NN as determined in accordance with Equation (8).

$$s_l = H_w W_w \left( \sum_{i=1}^{I} \mathbf{1}_{b_i^a > 0} \sum_{j=1}^{O} \max\left(0, b_j^w\right) + \sum_{j=1}^{O} \mathbf{1}_{b_j^w > 0} \sum_{i=1}^{I} \max\left(0, b_i^a\right) \right)$$

$$(8)$$

*Example 2*

In Example 2, as in Example 1, the first contribution is formed in dependence on an implementation cost of one or more output channels of weight data input to the layer, and the second contribution is formed in dependence on an implementation cost of one or more input channels of activation data input to the layer.

In Example 2, the transformation of sets of input values by the one or more quantisation blocks in block 502 of FIG. 5 is the same as described with reference to Example 1. Put another way, the input activation data $x$ and input weight data $w$ can be transformed in accordance with Equations (6) and (7), as described herein with reference to Example 1.

In Example 2, in block 504 of FIG. 5, the implementation cost of a layer $s_l$ can be defined in accordance with Equation (9), which is a differentiable function. In Equation (9), the first contribution is dependent on a sum of the bit widths $b_j^w$ according to which each of the one or more output channels $j$ of the weight data are transformed. The second contribution is dependent on a sum of the bit widths $b_i^a$ according to which each of the one or more input channels $i$ of the activation data are transformed. In Equation (9), the terms $\max(0, b_i^a)$ and $\max\left(0, b_j^w\right)$ can be used to ensure that the bit widths $b_i^a$ and $b_j^w$, respectively, are not adjusted below zero in the subsequent steps of the method, as described in further detail below. The implementation cost of a layer, $s_l$, is determined in dependence on a product of the first contribution and the second contribution, that product being multiplied by a product of the height $H_w$ and width $W_w$ dimensions of the weight data input to the layer. The implementation metric for the NN can be formed by summing the implementation costs of a plurality of layers of the NN as determined in accordance with Equation (9).

$$s_l = H_w W_w \sum_{i=1}^{I} \max(0, b_i^a) \sum_{j=1}^{O} \max\left(0, b_j^w\right)$$

$$(9)$$

*Example 3*

In Example 3, the first contribution is formed in dependence on an implementation cost of one or more output channels of weight data input to the layer, and the second contribution is formed in dependence on an implementation cost of one or more input channels of weight data input to the layer. As described herein, the number of output channels in the weight data for a layer corresponds to (e.g. is equal to) the number of channels (e.g. data channels) in the output data for that layer. Hence, the implementation cost of one or more output channels of weight data input to a layer can be taken as being representative of an implementation cost of an output from that layer. As described herein, the number of input channels in the weight data for a layer corresponds to (e.g. is equal to) the number of input channels in the activation data with which that weight data is to be combined. Further, as described herein, the activation data input to a layer is (or is derived directly from, e.g. in the case of intermediate operations such as summation blocks between layers) the output data from a layer preceding that layer. Hence, the implementation cost of one or more input channels of weight data input to the layer can be taken as being representative of an implementation cost of an output from a layer preceding that layer.

In Example 3, in block 502 of FIG. 5, each of the one or more sets of values transformed by the one or more quantisation blocks is a channel of values input to the layer. Each of one or more quantisation parameters according to which the one or more channels of values are transformed includes a respective bit width. In Example 3, for the purposes of step 504 of FIG. 5, a respective bit width $b_i$ (where the bit widths $b_i$ can be represented as a vector $\{b_i\}_{i=1}^{I}$ ) is determined for each of one or more input channels $i$ of weight data input to the layer, and a respective bit width $b_j$ (where the bit widths $b_j$ can be represented as a vector $\{b_j\}_{j=1}^{O}$ ) is determined for each of one or more output channels $j$ of weight data input to the layer. More specifically, the input weight data $w$ can be transformed in accordance with Equation (10A), (10B) or (1 0C), where the bit widths $b_i$ for the input channels of the weight data are encoded in a vector with $I$ elements and the bit widths $b_j$ for the output channels of the weight data are encoded in a vector with $O$ elements. In Equation (10A), the exponents $e_{ij}$ for the input and output channels of the weight data are encoded in a two-dimensional matrix. In other words, $b_i$ and $e_{ij}$ quantize each input channel of the weight data $w$ with a separate pair of quantisation parameters, and $b_j$ and $e_{ij}$ quantize each output channel of the weight data $w$ with a separate pair of quantisation parameters. Examples of suitable quantisation functions, $q$, are described below (e.g. with reference to Equation (37A), (37B) or (37C)).

$$w' = q\big(w, \min(b_i, b_j), e_{ij}\big) \qquad (10A)$$

$$w' = q\big(q(w, b_i, e_i), b_j, e_j\big) \qquad (10B)$$

$$w' = q\big(w, \min(b_i, b_j), e_j\big) \qquad (10C)$$

It is to be understood that, as described herein, each weight value is comprised by one input channel and one output channel of the weight data. This means that a first bit width $b_i$ and a second bit width $b_j$ is determined, respectively, for each weight value input to the layer. For the purposes of block 502 of FIG. 5, as shown in Equation (10A), each weight value input to the layer may be transformed according to its respective first or second bit width - and the exponent associated with that bit width (e.g. $e_i$ if $b_i$ is selected or $e_j$ if $b_j$ is selected). Optionally, the smaller (e.g. minimum) of its respective first and second bit widths could be selected. This is represented in Equation (10A) by the term $\min(b_i, b_j)$. Alternatively, as shown in Equation (10B), each weight value input to the layer may be transformed according to its respective first and second bit widths - and the exponents associated with those bit widths - e.g. in two passes. That is, the input weight data $w$ can alternatively be transformed in accordance with (10B). Alternatively again, as shown in Equation (10C), each weight value input to the layer may be transformed according to its respective first or second bit width - and the exponent associated with the output channel, $j$, comprising that weight value. Optionally, the smaller (e.g. minimum) of its respective first and second bit widths could be selected. This is represented in Equation (10C) by the term $\min(b_i, b_j)$. The exponents $e_j$ for the output channels of the weight data can be encoded in a vector with $O$ elements. Saving said vector, $e_j$, can consume less memory space than saving a two-dimensional matrix of exponents, $e_{ij}$, as described with reference to Equation (10A). Using the exponent, $e_j$, associated with the output channel, $j$, for each transformation regardless of which of the first and second bit widths are selected, as shown in Equation (10C) can be more robust (e.g. less likely to cause a training error) than selecting between the exponent associated with the input channel, $i$, and the exponent associated with the output channel, $j$, depending on which of the first and second bit widths are selected, as is the case in Equation (10A). This is because an exponent is less likely to "jump out of range" during training (e.g. become too big or too small for the quantisation to give a reasonable output as a result of a "large jump") if that exponent is used to quantise more values during training (i.e. as a result of always using $e_j$, rather than $e_{ij}$).

In Example 3, the implementation cost of a layer $s_l$ can be defined in accordance with Equation (11), which is a differentiable function. In Equation (11), the first contribution is dependent on a sum of the bit widths $b_j$ determined for each of the one or more output channels $j$ of the weight data. The second contribution is dependent on a sum of the bit widths $b_i$ determined for each of the one or more input channels $i$ of the weight data. In Equation (11), the terms $\max(0, b_i)$ and $\max(0, b_j)$ can be used to ensure that the bit widths $b_i$ and $b_j$, respectively, are not adjusted below zero in the subsequent steps of the method, as described in further detail below. The implementation cost of a layer, $s_l$, is determined in dependence on a product of the first contribution and the second contribution, that product being multiplied by a product of the height $H_w$ and width $W_w$ dimensions of the weight data input to the layer. The implementation metric for the NN can be formed by summing the implementation costs of a plurality of layers of the NN as determined in accordance with Equation (11).

$$s_l = H_w W_w \sum_{i=1}^{I} \max(0, b_i) \sum_{j=1}^{O} \max(0, b_j)$$

$$(11)$$

*Example 4*

In Example 4, the first contribution is formed in dependence on an implementation cost of one or more output channels of weight data input to the layer and an implementation cost of one or more biases input to the layer. The second contribution is formed in dependence on an implementation cost of one or more output channels of weight data input to the preceding layer and an implementation cost of one or more biases input to the preceding layer. As described herein, the number of output channels in the weight data for a layer corresponds to (e.g. is equal to) the number of channels (e.g. data channels) in the output data for that layer. Further, in layers that use offset biases, each of the output channels of the weight data are associated with respective biases. Hence, the implementation cost of one or more output channels of weight data input to a layer and the implementation cost of one or more biases input to that layer can be taken as being representative of a size of an output from that layer. For the same reasons, the implementation cost of one or more output channels of weight data input to a preceding layer and the implementation cost of one or more biases input to that preceding layer can be taken as being representative of an implementation cost of an output from that preceding layer.

In Example 4, in block 502 of FIG. 5, each of the one or more quantisation parameters include a respective bit width. The one or more sets of values transformed by the one or more quantisation blocks include one or more output channels of weight data and associated biases input to the layer and one or more output channels of weight data and associated biases input to the preceding layer. The one or more quantisation blocks are configured to transform each of the one or more output channels $j$ of weight data input to the layer according to a respective bit width $b_j^w$ (where the bit widths $b_j^w$ can be represented as a vector $\{b_j^w\}_{j=1}^{O}$ having O elements), transform each of the one or more biases $j$ input to the layer according to a respective bit width $b_j^{\beta}$ (where the bit widths $b_j^{\beta}$ can be represented as a vector $\{b_j^{\beta}\}_{j=1}^{O}$ having O elements), transform each of the one or more output channels $i$ of weight data input to the preceding layer according to a respective bit width $b_i^w$ (where the bit widths $b_i^w$ can be represented as a vector $\{b_i^w\}_{i=1}^{I}$ having I elements), and transform each of the one or more biases $i$ input to the preceding layer according to a respective bit width $b_i^{\beta}$ (where the bit widths $b_i^{\beta}$ can be represented as a vector $\{b_i^{\beta}\}_{i=1}^{I}$ having I elements). Optionally, the same bit width may be used to transform an output channel of weight data and its associated bias. That is, $b_j^w$ may equal $b_j^{\beta}$ and/or $b_i^w$ may equal $b_i^{\beta}$. More specifically, the weight data $w_j$ input to the layer can be transformed in accordance with Equation (12), the biases $\beta_j$ input to the layer can be transformed in accordance with Equation (13), the weight data

$w_i$ input to the preceding layer can be transformed in accordance with Equation (14), and the biases $\beta_i$ input to the preceding layer can be transformed in accordance with Equation (15). In Equations (12) to (15), $e_j^w$, $e_j^\beta$, $e_i^w$ and $e_i^\beta$ are the exponents for transforming $w_j$, $\beta_j$, $w_i$ and $\beta_i$ respectively. $e_j^w$, $e_j^\beta$, can be encoded in vectors having O elements. $e_i^w$, $e_i^\beta$ can be encoded in vectors having I elements. Examples of suitable quantisation functions, $q$, are described below (e.g. with reference to Equation (37A), (37B) or (37C)).

$$w_j' = q(w_j, b_j^w, e_j^w) \qquad (12)$$

$$\beta_j' = q\big(\beta_j, b_j^\beta, e_j^\beta\big) \qquad (13)$$

$$w_i' = q(w_i, b_i^w, e_i^w) \qquad (14)$$

$$\beta_i' = q\big(\beta_i, b_i^\beta, e_i^\beta\big) \qquad (15)$$

In Example 4, the implementation cost of a layer $s_l$ can be defined in accordance with Equation (16), which is a differentiable function. In Equation (16), the first contribution is dependent on the number of instances in which one or both of an output channel of the weight data input to the preceding layer and its associated bias input to the preceding layer are transformed in accordance with a more than zero bit width, multiplied by a sum of a weighted sum of the bit widths according to which each of the one or more output channels of weight data input to the layer are transformed and the bit widths according to which each of the one or more associated biases input to the layer are transformed. In Equation (16), the weighted sum is weighted by the term $\alpha$. The second contribution is dependent on the number of instances in which one or both of an output channel of the weight data input to the layer and its associated bias input to the layer are transformed in accordance with a more than zero bit width, multiplied by a sum of a weighted sum of the bit widths according to which each of the one or more output channels of weight data input to the preceding layer are transformed and the bit widths according to which each of the one or more associated biases input to the preceding layer are transformed. In Equation (16), the weighted sum is weighted by the term $\alpha$. In Equation (16), the terms $\max\big(0, b_j^w\big)$, $\max\big(0, b_j^\beta\big)$, $\max(0, b_i^w)$ and $\max\big(0, b_i^\beta\big)$ can be used to ensure that the bit widths $b_j^w$, $b_j^\beta$, $b_i^w$ and $b_i^\beta$, respectively, are not adjusted below zero in the subsequent steps of the method, as described in further detail below. The implementation cost of a layer, $s_l$, is determined in dependence on a sum of the first contribution and the second contribution, that sum being multiplied by a product of the height $H_w$ and width $W_w$ dimensions of the weight data input to the layer. The implementation metric for the NN can be formed by summing the implementation costs of a plurality of layers of the NN as determined in accordance with Equation (16).

$$s_l = H_w W_w \left( \sum_{i=1}^{I} \mathbf{1}_{\left(b_i^w > 0 \; OR \; b_i^\beta > 0\right)} \sum_{j=1}^{O} \big(\max(0, b_j^w) + \alpha \max\big(0, b_j^\beta\big)\big) \right.$$

$$\left. + \sum_{j=1}^{O} \mathbf{1}_{\left(b_j^w > 0 \; OR \; b_j^\beta > 0\right)} \sum_{i=1}^{I} \big(\max(0, b_i^w) + \alpha \max\big(0, b_i^\beta\big)\big) \right)$$

$$(16)$$

*Example 5*

In Example 5, the first contribution is formed in dependence on an implementation cost of one or more output channels of weight data input to the layer, and the second contribution is formed in dependence on an implementation cost of one or more output channels of weight data input to the preceding layer. As described herein, the number of output channels in the weight data for a layer corresponds to (e.g. is equal to) the number of channels (e.g. data channels) in the output data for that layer. Hence, the implementation cost of one or more output channels of weight data input to a layer can be taken as being representative of an implementation cost of an output from that layer. Example 5 may be used in preference to Example 4 in response to determining that the layer and the preceding layer do not receive biases.

In Example 5, in block 502 of FIG. 5, each of the one or more quantisation parameters include a respective bit width. The one or more sets of values transformed by the one or more quantisation blocks include one or more output channels of weight data input to the layer and one or more output channels of weight data input to the preceding layer. The one or more quantisation blocks are configured to transform each of the one or more output channels $j$ of weight data input to the layer according to a respective bit width $b_j$ (where the bit widths $b_j$ can be represented as a vector $\{b_j\}_{j=1}^{O}$ having O elements), and transform each of the one or more output channels $i$ of weight data input to the preceding layer according to a respective bit width $b_i'$ (where the bit widths $b_i'$ can be represented as a vector $\{b_i'\}_{i=1}^{I}$ having I elements). More specifically, the weight data $w_j$ input to the layer can be transformed in accordance with Equation (17), and the weight data $w_i'$ input to the preceding layer can be transformed in accordance with Equation (18). In Equations (17) and (18), $e_j$ and $e_i'$ are the exponents for transforming $w_j$ and $w_i'$ respectively. $e_j$ can be encoded in a vector having O elements. $e_i'$ can be encoded in a vector having I elements. Examples of suitable quantisation functions, $q$, are described below (e.g. with reference to Equation (37A), (37B) or (37C)).

$$\dot{w}_j = q(w_j, b_j, e_j) \qquad (17)$$

$$\dot{w}_i' = q(w'_i, b_i', e_i') \qquad (18)$$

In Example 5, the implementation cost of a layer $s_l$ can be defined in accordance with Equation (19), which is a differentiable function. In Equation (19), the first contribution is dependent on the number of instances in which an output channel of the weight data input to the preceding layer are transformed in accordance with a more than zero bit width, multiplied by a sum of the bit widths according to which each of the one or more output channels of weight data input to the layer are transformed. The second contribution is dependent on the number of instances in which an output channel of the weight data input to the layer are transformed in accordance with a more than zero bit width, multiplied by a sum of the bit widths according to which each of the one or more output channels of weight data input to the preceding layer are transformed. In Equation (19), the terms max$(0, b_j)$ and $\max(0, b_i')$ can be used to ensure that the bit widths $b_j$ and $b_i'$, respectively, are not adjusted below zero in the subsequent steps of the method, as described in further detail below. The implementation cost of a layer, $s_l$, is determined in dependence on a sum of the first contribution and the second contribution, that sum being multiplied by a product of the height $H_w$ and width $W_w$ dimensions of the weight data input to the layer. The implementation metric for the NN can be formed by summing the implementation costs of a plurality of layers of the NN as determined in accordance with Equation (19).

$$s_l = H_w W_w \left( \sum_{i=1}^{I} \mathbf{1}_{(b_i' > 0)} \sum_{j=1}^{O} \max(0, b_j) + \sum_{j=1}^{O} \mathbf{1}_{b_j > 0} \sum_{i=1}^{I} \max(0, b_i') \right)$$

$$(19)$$

*Example 6*

In Example 6, the first and second contributions are the same as the first and second contributions as described with respect to Example 5. That said, relative to Example 5, in Example 6 the implementation cost of a layer $s_l$ is further dependent on an additional contribution representative of an implementation cost of the biases ( $\beta_i'$ ) input to the preceding layer. Example 6 may be used in preference to Example 5 in response to determining that the preceding layer receives biases.

In Example 6, the transformation of sets of input values by the one or more quantisation blocks in block 502 of FIG. 5 is the same as described with reference to Example 5. Put another way, the one or more output channels of weight data $w_j$ input to the layer and one or more output channels of weight data $w_i'$ input to the preceding layer can be transformed in accordance with Equations (17) and (18), as described herein with reference to Example 6.

In Example 6, the implementation cost of a layer $s_l$ can be defined in accordance with Equation (20), which is a differentiable function. In Equation (20), the first and second contributions are the same as those shown in Equation (19). In Equation (20), a sum of the first contribution and the second contribution is multiplied by a product of the height $H_w$ and width $W_w$ dimensions of the weight data input to the layer. In Equation (20), the additional contribution is dependent on the number of instances in which an output channel of the weight data input to the preceding layer are transformed in accordance with a zero or less than zero bit width, multiplied by the number of instances in which an output channel of the weight data input to the layer are transformed in accordance with a more than zero bit width, multiplied by the absolute value of the biases ( $\beta_i'$ ) input to the preceding layer. It is to be understood that the biases ( $\beta_i'$ ) input to the preceding layer may or may not be quantised. As shown in Equation (20), optionally, this additional contribution is multiplied by a product of the height $H_w$ and width $W_w$ dimensions of the weight data input to the layer. As shown in Equation (20), optionally, this additional contribution is weighted by a term $\alpha$. The implementation metric for the NN can be formed by summing the implementation costs of a plurality of layers of the NN as determined in accordance with Equation (20).

$$s_l = H_w W_w \left( \sum_{i=1}^{I} \mathbf{1}_{(b_i'>0)} \sum_{j=1}^{O} \max(0, b_j) + \sum_{j=1}^{O} \mathbf{1}_{b_j>0} \sum_{i=1}^{I} \max(0, b_i') \right) + \alpha H_w W_w \sum_{i=1}^{I} \mathbf{1}_{b_i'\leq 0} \sum_{j=1}^{O} \mathbf{1}_{b_j>0} |\beta_i'|$$

(20)

*Example 7*

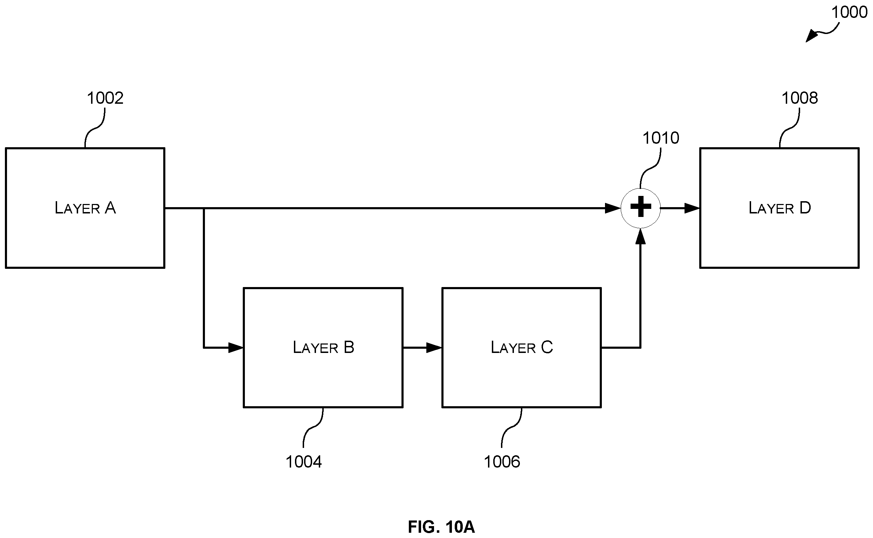

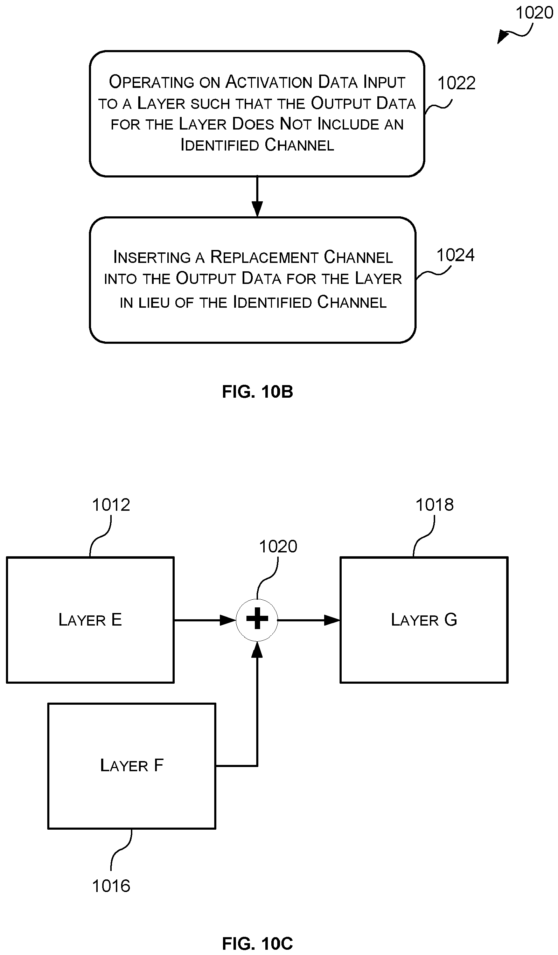

In many NN structures, the activation input of each layer is derived from the activation output of only one preceding layer. That said, in certain NN structures, the activation input of a layer may be derived from the activation outputs of more than one preceding layer. An example of such a NN is shown in FIG. 10C, which is a schematic diagram illustrating a NN comprising residual layers. In FIG. 10C, a summation operation 1020 receives inputs from both layer E 1012 and layer F 1016. The output of the summation operation 1020 is input to layer G 1018. That is, the activation input of layer G 1018 is derived from the activation outputs of two preceding layers - layer E 1012 and layer F 1016. Example 7 relates to determining the implementation cost of a layer receiving activation input data that has been derived from the activation outputs of more than one preceding layer.

In Example 7, the implementation metric for a layer (e.g. layer G 1018) is dependent on: a first contribution representative of an implementation cost of an output from that layer (e.g. layer G 1018); a second contribution representative of an implementation cost of an output from a first layer (e.g. layer E 1012) preceding that layer; and a third contribution representative of an implementation cost of an output from a second layer (e.g. layer F 1016) preceding that layer. The first contribution may be formed in dependence on the same factors as the first contributions described with reference to any of Examples 1 to 6. The second contribution may be formed in dependence on the same factors as the second contributions described with reference to any of Examples 1 to 6. The third contribution may be formed in dependence on the same factors as the second contributions described with reference to any of Examples 1 to 6. In Example 7, the implementation metric for a layer may be further dependent on additional contributions representative of implementation costs of the biases input to the first and second preceding layers, in accordance with the principles described herein with reference to Example 6.

To give one specific example in which the contributions to the implementation metric are based on the same factors as those described with reference to Example 5, in Example 7, the implementation cost of a layer $s_l$ can be

defined in accordance with Equation (21), which is a differentiable function. In Equation (21), the superscripts E, F and G are used to refer to terms associated with the first preceding layer (e.g. layer E 1012), the second preceding layer (e.g. layer F 1016) and the layer for which the implementation cost is being determined (e.g. layer G 1018). The one or more quantisation blocks are configured to transform each of the one or more output channels $j$ of weight data input to the layer (e.g. layer G) according to a respective bit width $b_j^G$ (where the bit widths $b_j^G$ can be represented as a vector $\{b_j^G\}_{j=1}^O$ having O elements), transform each of the one or more output channels $i$ of weight data input to the first preceding layer (e.g. layer E) according to a respective bit width $b_i^E$ (where the bit widths $b_i^E$ can be represented as a vector $\{b_i^E\}_{i=1}^I$ having I elements), and transform each of the one or more output channels i of weight data input to the second preceding layer (e.g. layer F) according to a respective bit width $b_i^F$ (where the bit widths $b_i^F$ can be represented as a vector $\{b_i^F\}_{i=1}^I$ having I elements). The skilled person would understand how these transformations could be performed with reference to Equations (17) and (18) as described herein with reference to Example 5. The implementation cost of a layer, $s_l$, is determined in dependence on a sum of the first contribution, the second contribution and the third contribution, that sum being multiplied by a product of the height $H_w$ and width $W_w$ dimensions of the weight data input to the layer (e.g. layer G 1018) for which the implementation cost is being determined. The implementation metric for the NN can be formed by summing the implementation costs of a plurality of layers of the NN as determined in accordance with Equation (21).

$$s_l = H_w W_w \left( \sum_{j=1}^{O} \mathbf{1}_{b_j^G > 0} \sum_{i=1}^{I} \max(0, b_i^E) + \sum_{j=1}^{O} \mathbf{1}_{b_j^G > 0} \sum_{i=1}^{I} \max(0, b_i^F) + \sum_{i=1}^{I} \mathbf{1}_{(b_i^E > 0 \ OR \ b_i^F > 0)} \sum_{j=1}^{O} \max(0, b_j^G) \right)$$

$$(21)$$

*Example 8*

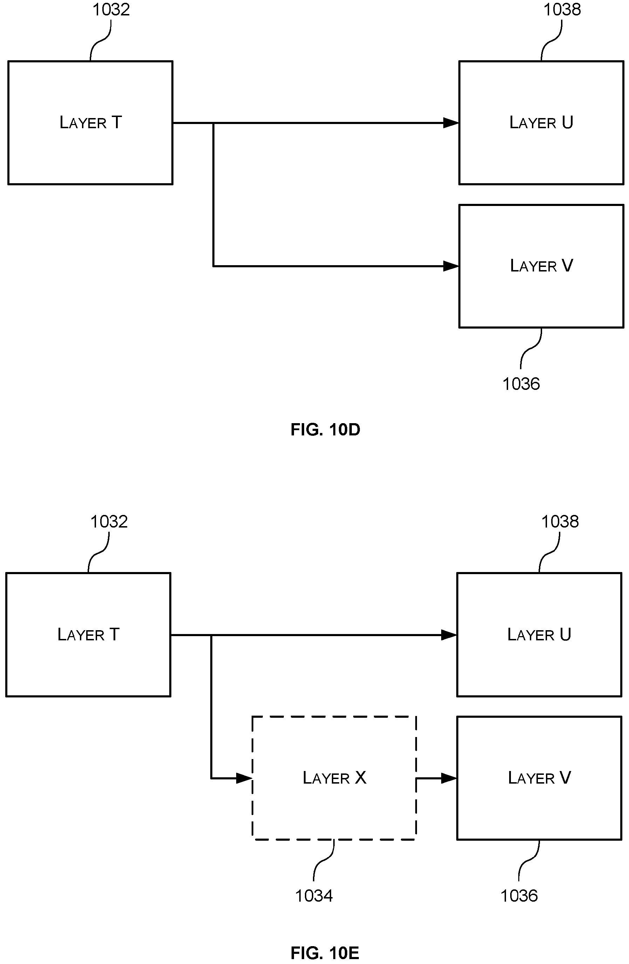

In many NN structures, the output of each layer is input to only one other layer (or output from the NN). That said, in certain NN structures, the output of a layer may be input to more than one subsequent layer. An example of such a NN is shown in FIG. 10D, which is a schematic diagram illustrating a NN comprising residual layers. In FIG. 10D, the output of layer T 1032 is input to both layer U 1038 and layer V 1036.

Referring to Figure 10D, it may not be desirable to determine an implementation cost for, for example, layer V 1036 that is dependent on a second contribution representative of an implementation cost of an output from layer T 1032. This is because, in the subsequent stages of the method (described in further detail below), one or more quantisation parameters are adjusted based at least in part on this second contribution, and optionally sets of values are removed from the model of the NN in dependence on the adjusted quantisation parameters. Adjusting the quantisation parameters used to transform weight data input to layer T 1032, adjusting the quantisation parameters used to transform activation data output from layer T 1032, or even removing sets of values from the inputs/ outputs of layer T 1032, could affect the computation performed at layer U 1038.

Example 8 can be used in order to prevent the implementation metric formed for layer V 1036 from potentially affecting the computation performed at layer U 1038. With reference to Figure 10E, in Example 8, a new layer X 1034 is added to the NN between layer T 1032 and layer V 1036. Layer X 1034 can be configured to receive the activation data output by layer T 1032 and output that activation data to layer V 1036. That is, layer X 1034 need not perform any computation on the activation data output by layer T 1032. In other words, layer X 1034 does not receive any weight data or biases. One or more quantisation blocks can be added to the quantising model of the NN to transform the sets of values input to new layer X according to respective quantisation parameters. An implementation metric for layer V 1036 can then be formed with layer X 1034 being the preceding layer (i.e. rather than layer T 1032). Said implementation metric can be formed using the principles described herein with reference to any of Examples 1 to 3. As the output of layer X 1034 is provided only to layer V 1036 (i.e. and not to layer U 1038), any subsequent adjustment made to the quantisation parameters used to transform the activation data output from layer X 1034, or any removal of sets of values from the activation data output from layer X 1034, will not affect the computation performed at layer U 1038.

Although not shown in Figure 10E, the same steps could be performed in order to form an implementation metric for layer U 1038. That is, a new layer could be added between layer T 1032 and layer U 1038. That new layer can be treated as the preceding layer for the purpose of calculating the implementation cost of layer U 1038.

*Example* 9

In some NN structures, the approaches described herein with reference to Examples 7 and 8 may be combined. An example of such a NN structure is shown in Figure 10A, which is a schematic diagram illustrating a NN comprising residual layers. In FIG. 10A, the output of layer A 1002 is input to layer B 1004 and summation operation 1010. The output of layer B 1004 is input to layer C 1006. The summation operation 1010 receives inputs from both layer A 1002 and layer C 1006. The output of the summation operation 1010 is input to layer D 1008.

This means that the activation input of layer D 1008 is derived from the activation outputs of two preceding layers - layer A 1002 and layer C 1006. That said, the output of layer A 1002 is also input to layer B 1004. Thus, performing the methods described herein using Example 7 to form an implementation metric for layer D 1008 that is dependent on a contribution representative of an implementation cost of an output from layer A 1002 could affect the computation performed at layer B 1004.

Hence, in Example 9, a new layer (not shown in Figure 10A) can be added between layer A 1002 and summation operation 1010 in accordance with the principles described with reference to Example 8. Then, in accordance with the principles described with reference to Example 7, an implementation metric for layer D 1008 can be formed that is dependent on: a first contribution representative of an implementation cost of an output from that layer (e.g. layer D 1008); a second contribution representative of an implementation cost of an output from a first layer (e.g. the newly added layer - not shown in Figure 10A) preceding that layer; and a third contribution representative of an implementation cost of an output from a second layer (e.g. layer C 1006) preceding that layer.

It is to be understood that, in the implementation metric, the implementation costs of different layers of the plurality of layers need not be calculated in the same way. For example, the implementation cost of a first layer of the plurality of layers may be calculated in accordance with Example 1, whilst the implementation cost of a second layer of the plurality of layers may be calculated in accordance with Example 4, and so on. Returning to FIG. 5, once the cost metric $cm$ for the set of quantisation parameters has been determined the method 500 proceeds to block 506.

At block 506, the derivative of the cost metric $cm$ is back-propagated to one or more quantisation parameters to generate a gradient of the cost metric with respect to each of the one or more quantisation parameters.

As is known to those of skill in the art, the derivative of a function at a particular point is the rate or speed at which the function is changing at that point. A derivative is decomposable and thus can be back-propagated to the parameters of a NN to generate a derivative or gradient of the cost metric with respect to those parameters. As described above, back-propagation (which may also be referred to as backwards propagation of errors) is a method used in training of NNs to calculate the gradient of an error metric with respect to the weights of the NN. Back-propagation can also be used to determine the derivative of the cost metric $cm$ with respect to the quantisation parameters (e.g. bit-widths $b$ and exponents $exp$) ($\frac{\partial cm}{\partial qp_i}$). The back-propagation of the derivative of the cost metric $cm$ to the quantisation parameters may be performed, for example, using any suitable tool for training a NN using back-propagation such as, but not limited to, TensorFlow™ or PyTorch™.

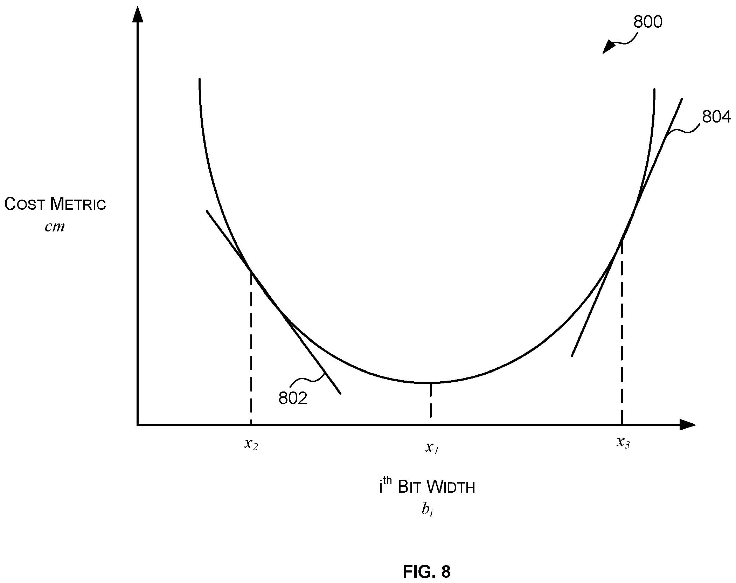

The gradient of the cost metric with respect to a particular quantisation parameter ($\frac{\partial cm}{\partial qp_i}$) indicates which direction to move the quantisation parameter to reduce the cost metric $cm$. Specifically, a positive gradient indicates that the cost metric $cm$ can be reduced by reducing the quantisation parameter; and a negative gradient indicates that the cost metric $cm$ can be reduced by increasing the quantisation parameter. For example, FIG. 8 shows a graph 800 of an example cost metric $cm$ with respect to a particular bit-width $b_i$. The graph 800 shows that the lowest cost metric is achieved when the bit width $b_i$ has a first value $x_1$. It can be seen from the graph 800 that when the bit width $b_i$ is less than $x_1$ (e.g. when it has a second value $x_2$) it has a negative gradient 802 and the cost metric $cm$ can be reduced by increasing the bit width $b_i$. Similarly, when the bit width $b_i$ is greater than $x_1$ (e.g. when it has a third value $x_3$) it has a positive gradient 804 and the cost metric $cm$. The gradient of the cost metric $cm$ with respect to a particular quantisation parameter may be referred to herein as the gradient for the quantisation parameter.

Once the derivative of the cost metric has been back-propagated to one or more quantisation parameters to generate a gradient of the cost metric for each of those quantisation parameters the method 500 proceeds to block 508.

At block 508, one or more of the quantisation parameters (e.g. bit widths $b_i$ and exponents $exp_i$) are adjusted based on the gradients. The objective of the method 500 is to identify the set of quantisation parameters that will produce the 'best' cost metric. What constitutes the 'best' cost metric will depend on the how the cost metric is calculated. For example, in some cases the lower the cost metric the better the cost metric, whereas in other cases the higher the cost metric the better the cost metric.

As described above, the sign of the gradient for a quantisation parameter indicates whether the cost metric will be decreased by increasing or decreasing the quantisation parameter. Specifically, if the gradient for a quantisation parameter is positive a decrease in the quantisation parameter will decrease the cost metric; and if the gradient for a quantisation parameter is negative an increase in the quantisation parameter will decrease the cost metric. Accordingly, adjusting a quantisation parameter may comprise increasing or decreasing the quantisation parameter in accordance with the sign of the gradient so as to increase or decrease the cost metric (depending on whether it is desirable to increase or decrease the cost metric). For example, if a lower cost metric is desirable and the gradient for the quantisation parameter is negative then the quantisation parameter may be increased in an effort to decrease the cost metric. Similarly, if a lower cost metric is desirable and the gradient for the quantisation parameter is positive then the quantisation parameter may be decreased in an effort to decrease the cost metric.

In some cases, the amount by which the quantisation parameter is increased or decreased may be based on the magnitude of the gradient. In particular, in some cases the quantisation parameter may be increased or decreased by the magnitude of the gradient. For example, if the magnitude of the gradient is 0.4 then the quantisation parameter may be increased or decreased by 0.4. In other cases, the quantisation parameter may be increased or decreased by a factor of the magnitude of the gradient.

More generally when the objective is to decrease the cost metric *cm* the adjusted quantisation parameter ($qp_{adj}$) may be generated by subtracting the gradient for that quantisation parameter ($g_{qp}$) from the quantisation parameter ($qp$) as shown in Equation (22). In some cases, it may be possible to adjust the rate at which different quantisation parameters are adjusted by multiplying the gradient by a learning rate *l* as shown in Equation (23). The higher the learning rate the faster the quantisation parameter will be adjusted. The learning rate can be different for different quantisation parameters.

$$qp_{adj} = qp - g_{qp} \qquad (22)$$

$$qp_{adj} = qp - l * g_{qp} \qquad (23)$$

Typically hardware to implement a NN can only support integer bit widths $b_i$ and exponents $exp_i$ and in some cases may only support a particular set of integer values for the bit widths and/or exponents. For example, the hardware logic that is to implement the NN may only support bit widths of 4, 5, 6, 7, 8, 10, 12 and 16. Therefore before a quantisation parameter is used to implement the NN in hardware the quantisation parameter is rounded to the nearest integer or the nearest integer in the set of supported integers. For example, if the optimum bit width is determined to be 4.4 according to the method the bit width may be quantised (e.g. rounded) to the nearest (RTN) integer (4 in this case) before it is used to implement the NN in hardware.

Accordingly, in some cases, to take into account the quantisation (e.g. rounding) of the quantisation parameters that occurs when the NN is implemented in hardware, when identifying the 'best' quantisation parameters, the increased/decreased quantisation parameters may be rounded to the nearest integer or to the nearest integer of a set of integers before the increased/decreased quantisation parameters are used in the next iteration as shown in Equation (24) where RTN is the round to nearest integer function and $qp_{adj}^{r}$ is the increased/decreased quantisation parameter after it has been rounded to the nearest integer. For example, after a particular bit width is increased or decreased in accordance with the gradient associated therewith, the increased or decreased bit width may be rounded to the nearest integer, or the nearest of the set {4, 5, 6, 7, 8, 10, 12, 16} before it is used in the next iteration.

$$qp_{adj}^{r} = RTN(qp_{adj}) \qquad (24)$$

In other cases, instead of actually quantising (e.g. rounding) the quantisation parameters after they have been increased/decreased, the transformation that the quantisation (e.g. rounding) of a quantisation parameter represents may be merely simulated. For example, in some cases, instead of rounding an increased/decreased quantisation parameter to the nearest integer, or nearest integer in a set, the quantisation may be simulated by performing stochastic quantisation on the increased/decreased quantisation parameter. Performing stochastic quantisation on the increased/decreased quantisation parameter may comprise adding a random value *u* between -*a* and +*a* to the increased/decreased quantisation parameter to generate a randomised quantisation parameter, where *a* is half the distance between (i) the closest integer in the set to the increased/decreased quantisation parameter that is less that the increased/decreased quantisation parameter and (ii) the closest integer in the set to the increased/decreased quantisation parameter that is greater than the increased/decreased quantisation parameter; and then setting the randomised quantisation parameter to the nearest of these two closest integers. When stochastic quantisation is used to simulate rounding to the nearest integer then *a* is equal to 0.5 and the stochastic quantisation may be implemented as shown in Equation (25) where RTN is the round to nearest integer function and $qp^s_{adj}$ is the increased/decreased quantisation parameter after stochastic quantisation.

$$qp^s_{adj} = RTN\big(qp_{adj} + u\big) \text{ where } u \leftarrow \mathcal{U}(-0.5, 0.5) \quad (25)$$

For example, if in a hardware implementation a bit width can be any integer in the set {4, 5, 6, 7, 8, 10, 12, 16}, if a bit width $b_i$ is increased/decreased to 4.4 then a random value between -0.5 and +0.5 is added to the increased/decreased bit width $b_i$ since the distance between the closest lower and higher integers in the set (4 and 5) is 1; and then the randomised bit width is set to the nearest of those two closest integers (4 and 5). Similarly, if a bit width $b_i$ is increased/decreased to 10.4 a random value between -1 and +1 is added to the increased/decreased bit width $b_i$ since the distance between the closest lower and higher integers in the set (10, 12) is 2; and then the randomised bit width is set to the nearest of those two closest integers (10, 12). In this way the increased/decreased quantisation parameter is rounded up or down to an integer with a probability proportional to the distance to that integer. For example 4.2 would be rounded to 4 with a 20% probability and to 5 with an 80% probability. Similarly 7.9 would be rounded to 7 with 10% probability and to 8 with 90% probability. Testing has shown that in some cases, the quantisation parameters can be identified more efficiently and effectively by adding the random value to the increased/decreased quantisation parameter and then rounding, instead of simply rounding the increased/decreased quantisation parameter.

In other cases, instead of rounding an increased/decreased quantisation parameter to the nearest integer, or nearest integer in a set, the quantisation of the quantisation parameter may be simulated by performing uniform noise quantisation on the increased/decreased quantisation parameter. Performing uniform noise quantisation on the increased/decreased quantisation parameter may comprise adding a random value *u* between -*a* and +*a* to the increased/decreased quantisation parameter where, as described above, *a* is half the distance between (i) the closest integer in the set to the increased/decreased quantisation parameter that is less that the increased/decreased quantisation parameter and (ii) the closest integer in the set to the increased/decreased quantisation parameter that is greater than the increased/decreased quantisation parameter. When uniform noise quantisation is used to simulate rounding to the nearest integer then *a* is equal to 0.5, and the uniform noise quantisation may be implemented as shown in Equation (26) wherein $qp^u_{adj}$ is the increased/decreased parameter after uniform noise quantisation. By simply adding a random value to the increased/decreased quantisation parameter the increased/decreased quantisation parameter is distorted in a similar manner as rounding the increased/decreased quantisation parameter.

$$qp^u_{adj} = qp_{adj} + u \qquad \text{ where } u \leftarrow \mathcal{U}(-0.5, 0.5) \quad (26)$$

In yet other cases, instead of rounding an increased/decreased quantisation parameter to the nearest integer, or nearest integer in a set, the quantisation of the quantisation parameter may be simulated by performing gradient averaging quantisation on the increased/decreased quantisation parameter. Performing gradient averaging quantisation may comprise taking the highest of the allowable integers that is less than or equal to the increased/decreased quantisation parameter and then adding a random value *h* between 0 and *c* where *c* is the distance between (i) the closest integer in the set to the increased/decreased quantisation parameter that is less that the increased/decreased quantisation parameter and (ii) the closest integer in the set to the increased/decreased quantisation parameter that is greater than the increased/decreased quantisation parameter (or by any operation that's mathematically equivalent to the above). When gradient averaging quantisation is used to simulate rounding to the nearest integer then *c* is equal to 1 and the gradient averaging quantisation may be implemented as shown in Equation (27) where RTNI is the round to negative infinity function (which may also be referred to as the floor function) and $qp^a_{adj}$ is the increased/decreased quantisation parameter after gradient averaging quantisation.

$$qp^a_{adj} = RTNI(qp_{adj}) + h \qquad \text{ where } h \leftarrow H(0,1) \qquad (27)$$

For example, if a bit width $b_i$ can be any integer in the set {4, 5, 6, 7, 8, 10, 12, 16} and a particular bit width $b_i$ is increased/decreased to 4.4 in accordance with the gradient, the highest integer in the set that is less than or equal to the increased/decreased quantisation parameter is chosen (i.e. 4) and a uniform random value between 0 and 1 is added thereto since the distance between the closest lower and higher integers in the set (4 and 5) is 1. Similarly, if a bit width

is $b_i$ increased/decreased to 10.4 in accordance with the gradient, the highest integer in the set that is less than or equal to the value is chosen (i.e. 10) and a random value between 0 and 2 is added thereto since the distance between the closest lower and higher integers in the set (10 and 12) is 2.

Testing has shown that the gradient averaging quantisation method works well for problems where the parameters being quantised are largely independent, but less well when optimising highly correlated parameters.

In yet other cases, instead of rounding an increased/decreased quantisation parameter to the nearest integer, or nearest integer in a set, the quantisation of the quantisation parameter may be simulated by performing bimodal quantisation which is a combination of round to the nearest integer quantisation (e.g. Equation (24)) and gradient averaging quantisation (e.g. Equation (27)). Specifically, in bimodal quantisation gradient averaging quantisation is performed on the increased/decreased quantisation parameter with probability $p$ and rounding quantisation is performed on the increased/decreased quantisation parameter otherwise. When bimodal quantisation is used to simulate rounding to the nearest integer, $p$ is twice the distance to the nearest integer and the bimodal quantisation may be implemented as shown in Equation (28) wherein $qp_{adj}^{b}$ is the increased/decreased quantisation parameter after bimodal quantisation thereof.

$$qp_{adj}^{b} = \begin{cases} qp_{adj}^{r} & if\ 1 - 2\left|qp_{adj} - RND(qp_{adj})\right| > u \quad where\ u \leftarrow \mathcal{U}(0,1) \\ qp_{adj}^{a} & otherwise \end{cases} \tag{28}$$

An ordered set of integers in which the difference between consecutive integers in the set is not constant is referred to as a non-uniform set of integers. For example, the ordered set of integers {4, 5, 6, 7, 8, 10, 12, 16} is a non-uniform set of integers as the difference between integers 4 and 5 is one, but the difference between integers 12 and 16 is four. In contrast, an ordered set of integers {1, 2, 3, 4, 5} is a uniform set of integers as the difference between any two consecutive integers is one.

As described above, to simulate the rounding of an increased/decreased quantisation parameter to the nearest integer in a non-uniform set of integers the quantisation parameters (e.g. $a$ or $c$) may be selected for one of the above quantisation simulation methods (e.g. stochastic quantisation, uniform noise quantisation, gradient average quantisation, or bimodal quantisation) based on the difference between the nearest integer in the set that is lower than the increased/decreased quantisation parameter and the nearest integer in the set that is higher than the increased/decreased quantisation parameter as described above and the increased/decreased quantisation parameter is quantised in accordance with the desired simulation method. In other cases, the rounding of an increased/decreased quantisation parameter to the nearest integer in a non-uniform set of integers may be simulated by: (1) scaling the increased/decreased quantisation parameter based on the distance/difference between the nearest lower integer in the non-uniform set of integers and the nearest higher integer in the non-uniform set of integers (which can be described as the local "density" of the values) to generate a transformed or scaled increased/decreased quantisation parameter; (2) simulating the rounding of the transformed increased/decreased quantisation parameter to the nearest integer using one of the simulation methods described above (e.g. Equation (25), (26), (27) or (28)); and (3) reversing the transformation or scaling performed in step (1) to get a final quantised increased/decreased quantisation parameter.

This will be further described by way of example. In this example the non-uniform set of integers is {4, 5, 6, 7, 8, 10, 12, 16}. In step (1) the increased/decreased quantisation parameter is scaled based on the distance/difference between the nearest lower integer in the non-uniform set of integers and the nearest higher value in the non-uniform set of integers. Specifically, the transformed or scaled increased/decreased quantisation parameter is equal to the increased/decreased quantisation parameters divided by the distance between the closest lower integer in the set and the closest higher integer in the set. For example, increased/decreased quantisation parameters between 8 and 12 are scaled (multiplied) by ½ as the distance between the nearest lower integer in the set (i.e. 8 or 10) and the nearest higher integer in the set (i.e. 10 or 12) is 2; increased/decreased quantisation parameters between 12 and 16 are scaled by ¼ as the distance between the nearest lower integer in the set (i.e. 12 or 14) and the nearest higher integer in the set (i.e. 14 or 16) is 4; and increased/decreased quantisation parameters between 4 and 8 are scaled by 1 as the distance between the nearest lower integer in the set (i.e. 4, 5, 6, 7) and the nearest higher integer in the set (i.e. 5, 6, 7, 8) is 1. For example, 13 is transformed to 3.25; 5.4 is transformed to 5.4; 8.9 is transformed to 4.45; and 11.5 is transformed to 5.75. This transformation can be represented by Equation (29) where $qp_{adj}$ is the increased/decreased quantisation parameter, $qp_{adj}^{t}$ is the transformed increased/decreased quantisation parameter and $s$ is as shown in Equation (30) where $I_{qp_{adj}>8}$ is 1 when $qp_{adj} > 8$ and 0 otherwise and $I_{qp_{adj}<82}$ is 1 when $qp_{adj} > 12$ and 0 otherwise such that $s = 1$ for $qp_{adj} < 8$, $s = 2$ for $8 < qp_{adj} < 12$ and $s = 4$ for $qp_{adj} > 12$.

$$qp_{adj}^t = \frac{qp_{adj}}{s} \quad (29)$$

$$s = \left(1 + I_{qp_{adj}>8}\right)\left(1 + I_{qp_{adj}>12}\right) \quad (30)$$

In step (2) the rounding of the transformed value to the nearest integer is simulated using one of the methods for simulating rounding to the nearest integer described above (e.g. Equation (25), (26), (27) or (28)). In step (3) the transformation performed in step (1) is reversed to generate a final quantised value. This is represented by Equation (31) where $qp_{adj}^{t-q}$ is the quantised transformed value generated in step (2) and $qp_{adj}^q$ is the final quantised increased/decreased quantisation parameter.

$$qp_{adj}^q = qp_{adj}^{t-q} * s \quad (31)$$

For example, if the output of step (2) is 3 and s=4 then this is transformed back to 12; if the output of step (2) is 5 and s=1 then this is transformed back to 5; if the output of step (2) is 4 and s=2 then this is transformed back to 8; and if the output of step (2) is 6 and s=2 then this is transformed back to 12. This is summarized in Table 2.

**Table 2**

| $qp_{adj}$ | 13 | 5.4 | 8.9 | 11.5 |
|---|---|---|---|---|
| $s$ | 4 | 1 | 2 | 2 |
| $qp_{adj}^t$ | 3.25 | 5.4 | 4.45 | 5.75 |
| $qp_{adj}^{t-q}$ | 3 | 5 | 4 | 6 |
| $qp_{adj}^q$ | 12 | 5 | 8 | 12 |

It will be evident to a person of skill in the art that these are examples of functions that can be used to quantise the quantisation parameters, or simulate the quantisation thereof, and that other functions may be used to quantise the quantisation parameters, or simulate the quantisation thereof. However, to be able to back-propagate the derivative of the cost metric *cm* to the quantisation parameters the quantisation function $q$ (e.g. $qp_{adj}^r$, $qp_{adj}^s$, $qp_{adj}^u$, $qp_{adj}^g$, $qp_{adj}^b$ ) is defined so that the derivative of the cost metric can be defined in terms of the quantisation parameters. The inventors have identified that a machine learning framework may generate a useful gradient of the cost function with respect to the quantisation parameters if the derivative of the quantisation function $q$ (e.g. $qp_{adj}^r$, $qp_{adj}^s$, $qp_{adj}^u$, $qp_{adj}^g$, $qp_{adj}^b$ ) with respect to the quantisation parameter being quantised is defined as one.

In some cases, the quantisation (e.g. rounding) of the increased/decreased quantisation parameters may be performed by the relevant quantisation block. For example, in some cases (as described in more detail below) the increased/decreased quantisation parameters may be provided to the quantisation blocks and each quantisation block may be configured to quantise (e.g. round) its quantisation parameters, or simulate the quantisation (e.g. rounding) thereof, before using the quantisation parameters to quantise the input values.

In cases where adjusting a quantisation parameter comprises quantising (e.g. rounding) the increased/decreased quantisation parameter (in accordance with the gradient) or simulating the quantisation thereof, by any of the methods described above, a higher precision (e.g. floating point) version of the quantisation parameter may be maintained and in subsequent iterations of block 508 it is the higher precision version of the quantisation parameter that is increased/decreased in accordance with the gradient. In some cases, a stochastically quantised version of the increase/decreased quantisation parameter may be maintained, and it is the stochastically quantised version of the quantisation parameter that is increased/decreased in a subsequent iteration.

After the one or more of the quantisation parameters (e.g. bit widths $b_i$ and exponents $exp_i$) are adjusted based on the gradients, the method moves to block 509, where sets of values may optionally be removed from the model of the NN. A set of values may be removed from the model of the NN in dependence on a quantisation parameter (e.g. a bit width) of that set of values or an associated set of values being adjusted to zero in block 508. This is because, in certain scenarios, removing a set of values from the model of the NN that can be quantised with a bit width of zero (i.e. where each value in that set of values can be quantised to zero) may not affect the output of the model of the NN relative to retaining a set of values consisting of zero values. That said, removing that set of values can decrease the inference time of the NN (and thereby increase its efficiency), as removing those values reduces the number of multiplication operations to be performed in a layer (even where those multiplications are multiplications by zero).

Six specific examples of removing sets of values from the model of the NN in response to adjusting a quantisation parameter to zero are provided. These examples refer back to Examples 1 to 6 described with reference to block 504. It is to be understood that these specific implementations are provided by way of example only, and that the principles described herein could be implemented differently.

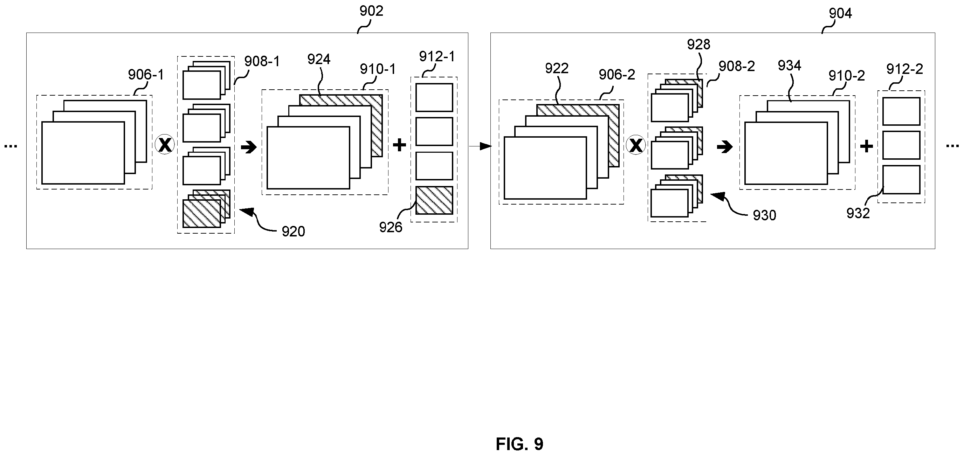

These examples can be understood with reference to FIG. 9, which shows the interaction between two adjacent layers of a NN. FIG. 9 shows a layer 904 and a layer 902 preceding that layer. In FIG. 9, layers 902 and 904 are both convolution layers. Activation data 906-1, weight data 908-1 and biases 912-1 are input to preceding layer 902. Activation data 906-2 (e.g. the output of preceding layer 902), weight data 908-2 and biases 912-2 are input to layer 904. For ease of understanding, intermediate output data 910-1 and 910-2 are shown for layer 902 and preceding layer 904 respectively, although it is to be understood that said intermediate data need not be physically formed by those layers and may merely represent logical values which conveniently describe the processing performed by those layers between their input and output.

In Examples 1 and 2, an output channel of weight data input to the preceding layer (and, if present, its associated bias) can be removed from the model of the NN when the adjusted bit width for a corresponding input channel of the activation data input to the layer is zero. For example, in FIG. 9, the output channel 920 of weight data input to the preceding layer 902 can be removed from the model of the NN when the adjusted bit width for the corresponding input channel 922 of the activation data input to the layer 904 is zero. The correspondence between these channels is shown using cross-hatching (as can be understood with reference to FIG. 2B). Using the implementation metrics defined with reference to Examples 1 or 2, it can be determined that is it "safe" to remove output channel 920 without affecting the output of the model of the NN (relative to retaining an output channel 920 consisting of zero values). This is because the outcome of the convolution with output channel 920 to generate intermediate output channel 924, and the subsequent summation with bias 926, generates an input channel 922 that the method 500 determines can be quantised with a zero bit width. Hence, it can be understood that there is no need to perform that convolution and summation. As such, output channel 920 of weight data 908-1, bias 926 of biases 912-1, input channel 922 of activation data 906-2 and input channel 928 of weight data 908-2 can be removed from the model of the NN without affecting the output of the model of the NN (relative to retaining an output channel 920 consisting of zero values).

In Example 3, an output channel of the weight data input to the preceding layer (and, if present, its associated bias) can be removed from the model of the NN when the adjusted bit width for a corresponding input channel of the weight data input to the layer is zero. For example, in FIG. 9, the output channel 920 of weight data input to the preceding layer 902 can be removed from the model of the NN when the adjusted bit width for the corresponding input channel 928 of the weight data input to the layer 904 is zero. The correspondence between these channels is shown using cross-hatching (as can be understood with reference to FIG. 2B). Using the implementation metrics defined with reference to Example 3, it can be determined that is it "safe" to remove output channel 920 without affecting the output of the model of the NN (relative to retaining an output channel 920 consisting of zero values). This is because the outcome of the convolution with output channel 920 to generate intermediate output channel 924, and the subsequent summation with bias 926, generates an input channel 922 that is to be convolved with an input channel 928 which the method 500 determines can be quantised with a zero bit width. Hence, it can be understood that there is no need to perform that convolution and summation. As such, output channel 920 of weight data 908-1, bias 926 of biases 912-1, input channel 922 of activation data 906-2 and input channel 928 of weight data 908-2 can be removed from the model of the NN without affecting the output of the model of the NN (relative to retaining an output channel 920 consisting of zero values).

Example 5 can be used to remove an output channel of the weight data input to the preceding layer when it is known that the preceding layer does not receive biases (not shown in Figure 9). In Example 5, an output channel of the weight data input to the preceding layer can be removed from the model of the NN when the adjusted bit width for that output channel is zero. The corresponding input channel of activation data input to the layer for which the implementation cost was formed and the corresponding input channel of weight data input to the layer for which the implementation cost was formed can also be removed from the model of the NN without affecting the output of the model of the NN (relative to retaining an output channel of the weight data input to the preceding layer consisting of zero values).

It is to be understood that it is not necessarily "safe" to remove an output channel of the weight data input to a layer in response to determining only that that output channel of the weight data could be encoded with a bit width of zero. This is because, as described herein, output channels of weight data can be associated with biases. With reference to FIG. 9, even if the adjusted bit width for an output channel 930 of the weight data input to the layer 904 is zero, its associated bias 932 may still be non-zero (e.g. have a non-zero bit width). In this case, if output channel 930 of the weight data 908-2 were to be removed from the model of the NN, intermediate output channel 934 would not be formed, meaning that bias 932 would have no values to sum to. This is an advantage of using an implementation metric such as those defined in Examples 1 to 3, which considers the interaction between two adjacent layers (e.g. by virtue of being dependent on a second contribution representative of an implementation cost of an output from a preceding layer).

In Example 4, an output channel of the weight data input to a layer can be removed from the model of the NN when the adjusted bit widths for that output channel and its associated bias are zero. For example, in FIG. 9, the output channel 920 of weight data input to the preceding layer 902 can be removed from the model of the NN when the adjusted bit width for that output channel 920 and its associated bias 926 are zero. The correspondence between these channels and biases is shown using cross-hatching (as can be understood with reference to FIG. 2B). As such, output channel 920 of weight data 908-1, bias 926 of biases 912-1, input channel 922 of activation data 906-2 and input channel 928 of weight data 908-2 can be removed from the model of the NN without affecting the output of the model of the NN (relative to retaining an output channel 920 consisting of zero values). Alternatively, or additionally, an output channel of weight data input to the layer 904 can be removed from the model of the NN when the adjusted bit width for that output channel and its associated bias are zero.

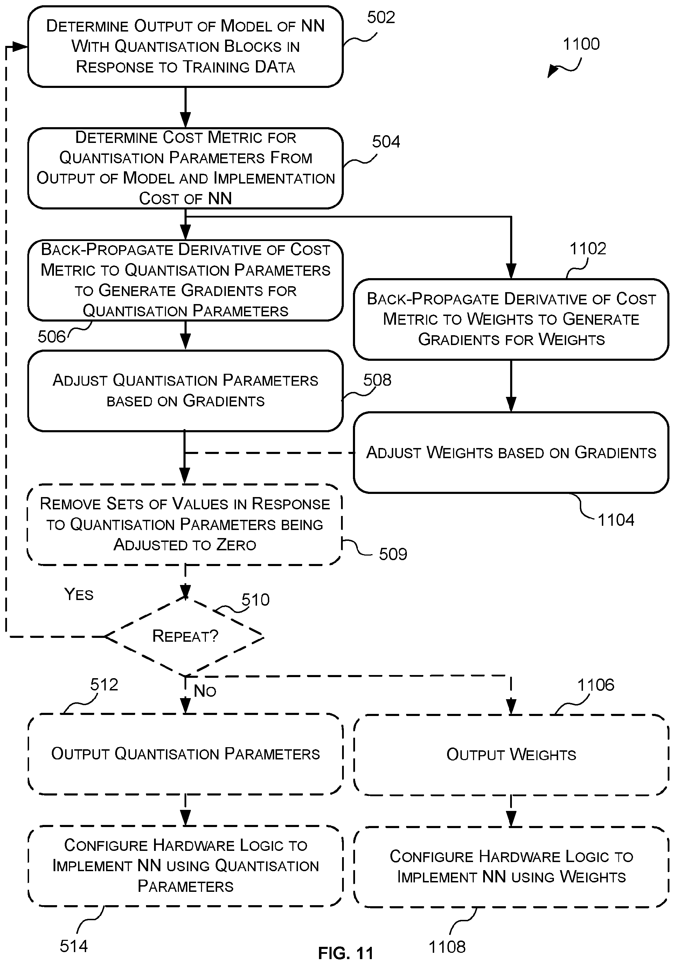

In Example 6, an output channel of the weight data input to the preceding layer can be removed from the model of the NN when the adjusted bit width for that output channel and the absolute value of its associated bias (e.g. as adjusted during back propagation - as described with reference to Figure 11) are zero. For example, in FIG. 9, the output channel 920 of weight data input to the preceding layer 902 can be removed from the model of the NN when the adjusted bit width for that output channel 920 and the adjusted absolute value of its associated bias 926 are zero. The correspondence between these channels and biases is shown using cross-hatching (as can be understood with reference to FIG. 2B). As such, output channel 920 of weight data 908-1, bias 926 of biases 912-1, input channel 922 of activation data 906-2 and input channel 928 of weight data 908-2 can be removed from the model of the NN without affecting the output of the model of the NN (relative to retaining an output channel 920 consisting of zero values).

An additional advantage of removing one or more sets of values in block 509 is that the training of the NN will then "accelerate" in subsequent iterations of blocks 502 to 508 as described in further detail below. This is because removing one or more sets of values from the model of the NN reduces the implementation cost of the model of the NN, and so increases its inference speed. Hence, subsequent iterations of blocks 502 to 508 can be performed more quickly.

In many NN structures, where the output of each layer is input to only one other layer (or output from the NN), the removal of one or more sets of values (e.g. output weight channels) in block 509 can be performed without need for any further modification to the NN. That said, in certain NN structures, the output of a layer may be input to more than one subsequent layer, or an operation of the NN may receive inputs from more than one preceding layer. An example of such a NN is shown in FIG. 10A, which is a schematic diagram illustrating a NN comprising residual layers. In FIG. 10A, the output of layer A 1002 is input to layer B 1004 and summation operation 1010. The output of layer B 1004 is input to layer C 1006. The summation operation 1010 receives inputs from both layer A 1002 and layer C 1006. The output of the summation operation 1010 is input to layer D 1008.

In FIG. 10A, it may be necessary for summation operation 1010 to receive two inputs having the same structure (e.g. two sets of input activation data having the same number of data channels). Hence, for example, if an output channel of the weight data input to layer A 1002 is removed in block 509, thereby leading to the corresponding data channel of its output not being formed (as can be understood with reference to FIG. 2B), it may be necessary to provide a replacement channel in the output of layer A 1002 prior to the summation operation 1010. Equivalently, if an output channel of the weight data input to layer C 1006 is removed in block 509, thereby leading to the corresponding data channel of its output not being formed (as can be understood with reference to FIG. 2B), it may be necessary to provide a replacement channel in the output of layer C 1006 prior to the summation operation 1010. A method 1020 of inserting a replacement channel into the output data for a layer in such a NN is described with reference to FIG. 10B. In an example, the method 1020 of FIG. 10B can be used for inserting a replacement channel into the output data for a layer in a Deep Neural Network (DNN) - which is a type of NN.

In block 1022, for an identified channel of output data for a layer, activation data input to that layer is operated on such that the output data for the layer does not include the identified channel. For example, this may be achieved by not including the output channel of the weight data that is responsible for forming the identified channel such that the output data for the layer does not include the identified channel. As described herein, it may be identified in a training phase of the NN that the output channel of the weight data (and, optionally, the corresponding bias) that is responsible for forming the identified channel is quantisable with a bit width of zero (e.g. can be removed from the model of the NN without affecting the output of the model of the NN relative to retaining an output channel of the weight data input to the preceding layer consisting of zero values - as described with reference to block 508 and 509). In other words, having determined in a training phase of the NN that an output channel of weight data (and, optionally, the corresponding bias) is quantisable with a bit width of zero, the identified channel of output data can be identified as the channel of output data that that output channel of the weight data (and, optionally, the corresponding bias) is responsible for forming. In Figure 10A, the effect of this step may be that the output data for layer A 1002 does not include the identified channel. Said output of layer A 1002 (i.e. not including the identified channel) may be operated on by layer B 1004. In Figure 10A, the effect of this step may be that the output data for layer C 1006 does not include the identified channel.

In block 1024, prior to an operation (e.g. summation operation 1010) of the NN configured to operate on the output data for the layer, a replacement channel can be inserted into the output data for the layer in lieu of (e.g. in place of) the identified channel. For example, the replacement channel may be a channel consisting of a plurality of zero values. The identified channel may be an array of data values, and the replacement channel may be an array of zeros (e.g. zero values) having the same dimensions as that array of data values. Said operation of the NN (e.g. summation operation 1010) can then be performed in dependence on the replacement channel. It is to be understood that, if the identified channel consisted of a plurality of zero values, inserting a replacement channel consisting of a plurality of zeros as described herein would not change the result of the operation of the NN relative to performing the operation of the NN by retaining the identified channel consisting of a plurality of zero values.

A replacement channel can be inserted in dependence on information indicative of the structure of the output data for the layer were the identified channel to have been included. That is, said information can indicate what the structure of the output data for the layer would have been, in the event that that output data had been formed including the identified channel. In other words, a replacement channel can be inserted in dependence on information indicative of the structure of the output data for the layer if the identified channel had been included. That information may be generated in a training phase of the NN, the information being indicative of the structure of the output data for the layer including the identified channel. For example, said information may comprise a bit mask. Each bit of the bit mask may represent a data channel, a first bit value (e.g. 1 or 0) being indicative of a data channel included in the output data and a second bit value (e.g. 0 or 1) being indicative of a data channel not included in the output data. The replacement channel can be inserted into the output data for the layer where indicated by a second bit value of the bit mask. For example, were the bit mask to include a run of bit values of ...1, 0, 1..., a replacement channel may be inserted where indicated by the bit value 0, between the two data channels included in the output data represented by bit values 1. It is to be understood that the method of inserting a replacement channel described herein can be used to insert multiple replacement channels in lieu of multiple respective identified channels. For example, the bit mask may include multiple second bit values, each being indicative of a data channel not included in the output data, such that multiple replacement channels can be inserted into the output data for the layer where indicated by those second bit values.

This method of inserting a replacement channel may be performed during the training phase of the NN (e.g. when performing subsequent iterations of blocks 502-509 after determining in an earlier iteration that an output channel of weight data is quantisable with a bit width of zero, as described in further detail below) and/or when subsequently implementing the NN to process data in a use-phase (e.g. in block 514, also described in further detail below).

Once one or more of the quantisation parameters have been adjusted based on the gradients in block 508 (and optionally one or more sets of values removed in block 509) the method 500 may end or the method 500 may proceed to block 510 where the blocks 502-509 may be repeated.

At block 510, a determination is made as to whether blocks 502-509 are to be repeated. In some cases, the determination as to whether blocks 502-509 are to be repeated is based on whether a predetermined number of iterations of blocks 502-509 have been completed or a predetermined amount of training time has elapsed. The predetermined number of iterations or the predetermined amount of training may have been determined empirically as being sufficient to produce good results. In other cases, the determination as to whether blocks 502-509 are to be repeated may be based on whether the cost metric has converged. Any suitable criteria may be used to determine when the cost metric has converged. For example, in some cases it may be determined that the cost metric has converged if it hasn't changed significantly (e.g. more than a predetermined threshold) over a predetermined number of iterations.

If it is determined that blocks 502-509 are not to be repeated, then the method 500 may end or the method 500 may proceed to block 512. If, however, it is determined that blocks 502-509 are to be repeated then the method 500 proceeds back to block 502 where blocks 502-509 are repeated with the quantisation parameters as adjusted in block 508 (and, optionally, not including the sets of values removed in block 509). For example, if in the first iteration a set of values is transformed by a quantisation block to a fixed point number formation defined by a mantissa bit width of 6 and an exponent of 4 and the mantissa bit width is adjusted to a bit width of 5 and the exponent is not adjusted then in the next iteration that set of values will be transformed by the quantisation block to a fixed point number format defined by a bit width of 5 and an exponent of 4.

At block 512, the quantisation parameters as adjusted in block 508, and, optionally, information indicating the sets of values removed in block 509, are output for use in configuring hardware logic to implement the NN. In some cases, it is the floating point versions of the quantisation parameters that are output. In other cases, it is the versions of the quantisation parameters that can be used by hardware logic that are output (i.e. the floating point versions of the quantisation parameters after they have been quantised to integers or to a set of integers). The quantisation parameters may be output in any suitable manner. Once the quantisation parameters, as adjusted in block 508, have been output the method 500 may end or the method 500 may proceed to block 514.

At block 514, hardware logic capable of implementing a NN is configured to implement the NN using the quantisation parameters output in block 512. Where the quantisation parameters output in block 512 were in a floating point number format the quantisation parameters may be quantised to integers, or a set of integers, before they are used to configure hardware logic to implement the NN. Configuring hardware logic to implement a NN may generally comprise configuring the hardware logic to process inputs to each layer of the NN in accordance with that layer and provide the output of that layer to a subsequent layer or provide the output as the output of the NN. For example, if a NN comprises a first convolution layer and a second normalisation layer, configuring hardware logic to implement such a NN comprises configured the hardware logic to receive inputs to the NN and process the inputs as input activation data in accordance with the weight data of the convolution layer, process the outputs of the convolution layer in accordance with the normalisation layer, and then output the outputs of the normalisation layer as the outputs of the NN. Configuring a hardware logic to implement a NN using the quantisation parameters output in block 512 may comprise configuring the hardware logic to receive and process inputs to each layer in accordance with the quantisation parameters for that layer (i.e. in accordance with the fixed point number formats defined by the quantisation parameters). For example, if the quantisation parameters indicated that a fixed point number format defined by an exponent of 4 and a bit-width of 6 is to be used for the input data values of a layer of the NN then the hardware logic to implement the NN may be configured to interpret the input data values of that layer on the basis that they are in a fixed point number format defined by an exponent of 4 and a bit width of 6.

When implementing the NN at block 514, the sets of values removed from the model of the NN at block 509 may not be included in the run-time implementation of the NN. For example, where an output channel of weight data input to a layer is removed at block 509, the weight values of that output channel may not be written to memory for use by the run-time implementation of the NN and/or the hardware implementing the run-time implementation of the NN may not be configured to perform multiplications using those weight values.

In the method 500 of FIG. 5 the complete cost metric is calculated (e.g. in accordance with Equation (3)) and the derivative of the cost metric is back-propagated to the quantisation parameters to calculate a gradient for each quantisation parameter. The gradient for a particular quantisation parameter is then used to adjust the quantisation parameter. However, in other examples calculating the cost metric may comprise calculating the error metric and implementation metric and determining a separate gradient for each metric for each quantisation parameter. In other words, a gradient of the error metric with respect to each quantisation parameter is generated and a gradient of the implementation metric with respect to each quantisation parameter is generated. The gradient of the error metric with respect to a quantisation parameter may be generated by backpropagating the derivative of the error metric to the quantisation parameter in the same manner as the derivative of the cost metric is backpropagated to a quantisation parameter. The gradient of the implementation metric with respect to quantisation parameter may be generated by back-propagation or may be generated directly from the implementation metric. A final gradient for each quantisation parameter may be generated from the two gradients in the same manner that the corresponding cost metrics are combined to form the cost metric. For example, a final gradient may be generated as the weighted sum of the two gradients. By varying the weights associated with the two gradients a balance can be found between implementation cost and error. The quantisation parameters may then be adjusted in accordance with the final gradients in the same manner as described above.

**Identification of Quantisation Parameters and Weights**

Although the method 500 of FIG. 5 has been described as being used to identify the quantisation parameters of the NN, in other examples the weight values (e.g. weights) and, optionally, biases of the NN may be identified concurrently with the quantisation parameters. In these cases, the derivative for the cost metric may also be back-propagated to the weights (and, optionally, biases) to generate gradients of the cost metric with respect to the weights (and, optionally, biases), and the weights (and, optionally, biases) may be adjusted in a similar manner as the quantisation parameters based on the corresponding gradients.

Reference is now made to FIG. 11 which illustrates a method 1100 of identifying the quantisation parameters and weights (and, optionally, biases) of a NN. In an example, the method 1100 of FIG. 11 can be used for identifying quantisation parameters and weights (and, optionally, biases) of a Deep Neural Network (DNN) - which is a type of NN - via back-propagation. The method 1100 may be used to re-train the network to take into account the quantisation of the values of the NN (e.g. to update the weights after an initial training session, such as, an initial training session performed on a floating point model of the NN) or may be used to perform an initial training of the network (e.g. to train the network from an untrained set of weights). The method 1100 includes blocks 502 to 512 of the method 500 of FIG. 5, but also comprises blocks 1102 and 1104 (and optionally blocks 1106 and 1108). Blocks 502 to 512 operate in the same manner as described above. When the method 1100 is used to re-train the NN the initial set of weights used in the quantising model of the NN may be a trained set of weights. However, where the method 1100 is used to train the NN, the initial set of weights used in the model of the NN may be a random set of weights or another set of weights designed for training a NN.

At block 1102, after the output of the quantising model of the NN in response to training data has been determined (block 502) and a cost metric has been determined from the output of the quantising model of the NN and the quantisation parameters (block 504), the derivative of the cost metric is back-propagated to one or more weights (and, optionally, biases) so as to generate gradients of the cost metric with respect to each of those weights (and, optionally, biases). The gradient of the cost metric with respect to a weight is referred to herein as the gradient for the weight. As with the gradients for the quantisation parameters a positive gradient for a weight indicates that the cost metric can be decreased by decreasing that weight, and a negative gradient for a weight indicates that the cost metric may be decreased by increasing that weight. Once the gradients for the one or more weights (and, optionally, biases) have been generated the method proceeds to block 1104.

At block 1104, one or more of the weights (and, optionally, biases) are adjusted based on the gradients for the weights (and, optionally, biases). The weights (and, optionally, biases) may be adjusted in a similar manner to the quantisation parameters. For example, as described above, the sign of the gradient for a weight indicates whether the cost metric will be decreased by increasing or decreasing the weight. Specifically, if the gradient for a weight is positive a decrease in the weight will decrease the cost metric; and if the gradient for a weight is negative an increase in the quantisation parameter will decrease the cost metric. Accordingly, adjusting a weight may comprise increasing or decreasing the weight in accordance with the sign of the gradient so as to increase or decrease the cost metric (depending on whether it is desirable to increase or decrease the cost metric). For example, if a lower cost metric is desirable and the gradient for the weight is negative then the weight may be increased in an effort to decrease the cost metric. Similarly, if a lower cost metric is desirable and the gradient for the weight is positive then the weight may be decreased in an effort to decrease the cost metric.

In some cases, the amount by which the weight is increased or decreased may be based on the magnitude of the gradient for that weight. In particular, in some cases, a weight may be increased or decreased by the magnitude of the gradient for that weight. For example, if the magnitude of the gradient is 0.6 then the weight may be increased or decreased by 0.6. In other cases, the weight may be increased or decreased by a factor of the magnitude of the gradient for that weight. In particular, in some cases, weights may converge faster by adjusting the weights by what is referred to as a learning rate.

Once the weights (and, optionally, biases) have been adjusted based on the corresponding gradients the method 1100 may end or the method 1100 may proceed to block 509 where one or more sets of values may optionally be removed from the model of the NN. Thereafter, blocks 502-508 and 1102-1104 may be repeated. Similar to blocks 512 and 514, the method 1100 may also comprise outputting the adjusted weights (and, optionally, biases) (at 1106) and/or configuring hardware to implement the NN using the adjusted weights (and, optionally, biases) (at 1108).

Although in the method 1100 of FIG. 11 the weights (and, optionally, biases) and the quantisation parameters are adjusted each iteration, in other examples in each iteration one or both of the weights (and, optionally, biases) and the quantisation parameters may be selected for adjustment. For example, the quantisation parameters may be adjusted for a predetermined number of iterations and then the weights (and, optionally, biases) may be adjusted for a predetermined number of iterations. In other cases the weights (and, optionally, biases) and the quantisation parameters may be adjusted in alternate iterations. For example, weight (and, optionally, bias) adjustment may be performed in odd numbered iterations and quantisation parameter adjustments may be performed in even numbered iterations. This would allow the weights (and, optionally, biases) to be adjusted while the quantisation parameters are rounded (or the rounding thereof is simulated) and the quantisation parameters to be adjusted while the weights (and, optionally, biases) are rounded.

## Quantisation Blocks

Example implementations of the quantisation blocks of a quantising model of a NN will now be described. As described above, each quantisation block is configured to transform one or more sets of values input to a layer of a NN to a fixed point number format defined by one or more quantisation parameters. In these examples, each fixed point number format is defined by a mantissa bit length $b$ and an exponent $exp$ where the exponent $exp$ is an integer that is shared by a set of values that are represented in the fixed point number format such that the size of the set of input data values in the fixed point number format is based on the mantissa bit length $b$.

To be able to back-propagate the derivative of the cost metric to the quantisation parameters, not only is the quantisation function performed by each quantisation blocks defined, but the derivative thereof is defined. In practice an equation's derivate is automatically defined by a machine learning framework, such as, but not limited to, TensorFlow™ or PyTorch™.

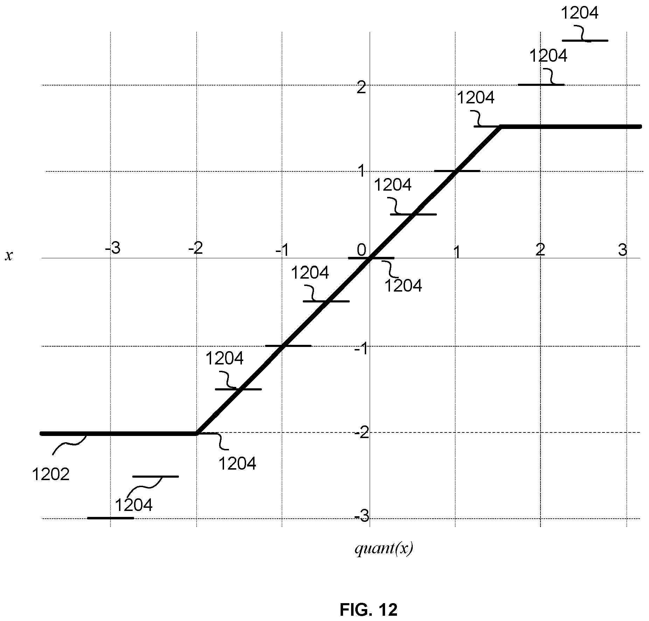

The process of quantising a value $x$ to a fixed point number format can be described as comprising two steps - (i) thresholding the value $x$ to the range of numbers representable by the fixed point number format (e.g. line 1202 of FIG. 12 for an exponent of -1 and bit width of 3); and (ii) selecting a representable number in the fixed point number format to represent the value $x$ by rounding the thresholded value $x$ to the nearest $exp^{th}$ power of 2 (e.g. lines 1204 of FIG. 12 for an exponent of -1 and a bit width of 3).

The thresholding step of the quantisation operation of a value $x$ to a fixed point number format defined by a mantissa bit length $b$ and an exponent $exp$ - i.e. thresholding the value $x$ to the range representable by the fixed point number format - may be implemented by Equation (32) wherein $clamp(x, low, high)$ is as defined in Equation (33) and $low$ is the minimum or lowest representable number in the fixed point number format defined by $b$ and $exp$ (e.g. $low = -2^{b-exp-1}$) and $high$ is the maximum or highest representable number in the fixed point number format defined by $b$ an $exp$ (e.g. $high = 2^{b+exp-1} - 2^{exp}$):

$$thresh(x, b, exp) = clamp(x, -2^{exp+b-1}, 2^{exp+b-1} - 2^{exp}) \quad (32)$$

$$clamp(x, low, high) = min(\max(x, low), high) \quad (33)$$

To be able to perform back-propagation through the thresholding operation a derivative of the thresholding operation is defined. The derivative of the thresholding function defined in Equation (32) with respect to $x$ is 1 for values that fall within the representable range and 0 otherwise. However, in some cases a more useful derivative is one that is 1 for all values that fall within the quantisation bins and 0 otherwise. This can be achieved by using the thresholding function set out in Equation (34) instead of the thresholding function set out in Equation (32):

$$thresh(x, b, exp) = clamp(x, -2^{exp+b-1} - 2^{exp-1}, 2^{exp+b-1} - 2^{exp-1}) \quad (34)$$

The rounding step of the quantisation operation - i.e. rounding a value to the nearest $exp^{th}$ power of 2 - can be implemented by either of Equation (35A) or Equation (35B), where $\lfloor \ \rfloor$ is the RTNI (round towards negative infinity) function (also known as the floor function).

$$round(x, exp) = 2^{exp} \left\lfloor 2^{-exp}x + \frac{-1^{sign(x)}}{2} \right\rfloor \quad (35A)$$

$$round(x, exp) = 2^{exp} \left\lfloor 2^{-exp}x - \frac{-1^{sign(x)}}{2} \right\rfloor \quad (35B)$$

The derivative of the rounding function defined in either of Equation (35A) or Equation (35B) with respect to $x$ may not be useful in identifying NN parameters (e.g. weights and/or quantisation parameters) as it is zero almost everywhere, so the derivative may be set to 1.

Thus the total quantisation $quant(x, b, exp)$ of a value $x$ to a fixed point number format defined by a bit width $b$ and an exponent $exp$ can be implemented using a combination of the thresholding equation (either Equation (32) or Equation (34)) and the rounding equation (either Equation (35A) or Equation (35B)) as shown in Equation (36):

$$quant(x, b, exp) = round(thresh(x, b, exp), exp) \quad (36)$$

Where the quantisation block is not configured to quantise (e.g. round) the received quantisation parameters before using the quantisation parameters to quantise an input value, the combined formula can be written as shown in Equation (37A). It can be advantageous during a training phase (e.g. as described herein with reference to blocks 502 to 510 of FIG. 5) for the quantisation block to not be configured to quantise (e.g. round) the received quantisation parameters, so that the quantisation parameters used by the quantisation block to quantise an input value during that training phase are not constrained to having integer values - which can enable higher resolution (e.g. higher precision) training of those quantisation parameters.

$$\text{quant}(x, b, exp) = 2^{exp}\text{round}\left(\min\left(\max\left(2^{-exp}x, -2^{(b-1)}\right), 2^{(b-1)} - 1\right)\right) \quad (37A)$$

In alternative example where the quantisation block is not configured to quantise (e.g. round) the received quantisation parameters before using the quantisation parameters to quantise an input value, the combined formula can be written as shown in Equation (37B). The main difference between Equation (37A) and Equation (37B) is the introduction of $\alpha$ which is a scaling factor (e.g. a shift parameter).

$$\text{quant}(x, b, exp, \alpha) = 2^{exp}\text{round}\left(\min\left(\max\left(2^{-exp}x, (\alpha - 1)2^{(b-1)}\right), (\alpha + 1)2^{(b-1)} - 1\right)\right) \qquad (37B)$$

Where the quantisation block is configured to receive the increased/decreased quantisation parameters and quantise (e.g. round) the received quantisation parameters before using the quantisation parameters to quantise an input value, the combined formula can be written as shown in Equation (37C) wherein $q$ is the rounding function or quantisation function used to quantise the quantisation parameters or simulate the quantisation thereof. Example rounding functions for quantising the quantisation parameters or for simulating the quantisation thereof were described above in relation to block 508. In other words, the quantisation function $q$ may implement (i) the rounding method described above to round to the nearest integer or nearest integer in a set, or (ii) any of the methods described above that simulate rounding to the nearest integer or integer in a set (e.g. one of the stochastic quantisation method, uniform quantisation method, gradient averaging quantisation method or the bimodal quantisation method). As described above, to be able to back propagate the derivative of the cost metric $cm$ to the quantisation parameters the quantisation function $q$ is defined so that the derivative of the cost metric can be defined in terms of the quantisation parameters. It can be advantageous during a training phase (e.g. as described herein with reference to blocks 502 to 510 of FIG. 5) for the quantisation block to be configured to quantise (e.g. round) the received quantisation parameters before using the quantisation parameters to quantise an input value, as this can enable the training to take account of the quantisation (e.g. rounding) of the quantisation parameters that will occur when the NN is subsequently implemented in hardware - especially where quantisation block is configured to use those quantisation parameters to quantise input activation values.

$$quant(x, b, exp) = 2^{q(exp)}round\left(clamp\left(2^{-q(exp)}x, -2^{q(b-1)}, 2^{q(b-1)} - 1\right)\right) \qquad (37C)$$

The inventor has identified that a machine learning framework may generate useful gradients of the cost function with respect to the quantisation parameters (e.g. gradients which can be used to adjust the quantisation parameters) if the derivative of the quantisation function $q$ with respect to the quantisation parameter it is quantising is defined as one. For example, testing has shown that if the derivative of the quantisation function $q$ with respect to the quantisation parameter it is quantising is set to one, then a machine learning framework may generate: (i) the derivative $d_b(x)$ of the main quantisation function $quant$ with respect to the quantisation parameter $b$ as shown in Equation (38) where $low$ is the minimum or lowest representable number in the fixed point number format defined by $b$ and $exp$, and $high$ is the maximum or highest representable number in the fixed point number format defined by $b$ and $exp$; and (ii) the derivative $d_{exp}(x)$ of the main quantisation function $quant$ with respect to the quantisation parameter $exp$ as shown in Equation (39).

$$d_b(x) = \begin{cases} x < low, & \log(2)\,(low) \\ x > high, & \log(2)\,(-low) \\ otherwise, & 0 \end{cases} \qquad (38)$$

$$d_{exp}(x) = \begin{cases} x < low, & 2^{exp}\log(2)\,round(-2^{b-1}) \\ x > high, & 2^{exp}\log(2)\,round(2^{b-1} - 1) \\ otherwise, & \log(2)\,(2^{exp}round(2^{-exp}x) - x) \end{cases} \qquad (39)$$

It can be seen that the machine learning framework may calculate a derivative of the cost function for each quantisation parameter (e.g. $b$, $exp$) of a quantisation block for each input value quantised by that quantisation block. The machine learning framework may then calculate a final derivative of the cost function for each quantisation parameter (e.g. $b$, $exp$) based on the individual derivates for each quantisation parameter. For example, in some cases the machine learning framework may calculate a final derivative of the cost function for each quantisation parameter of a quantisation block by adding or summing the individual derivatives for that quantisation parameter.

Where a variable bit length variant of the Q8A fixed point number format is used to represent the input values to the layers of a NN and the zero point $z$ is 0 the quantisation function performed by a quantisation block may be represented by Equation (40) where $b$, $exp$, and $\alpha$ are the trainable quantisation parameters:

$$quant(x, b, exp, \alpha) = 2^{exp}round\left(clamp\left(2^{-exp}x, (\alpha - 1)2^{q(b-1)}, (\alpha + 1)2^{q(b-1)} - 1\right)\right) \qquad (40)$$

The main differences between Equation (40) and Equation (37C) are the introduction of $\alpha$ which is a scaling factor, and the fact that *exp* is not quantised. The quantisation parameters of the variable bit length variant of the Q8A format, as shown in Equation (1), can be generated from the trained quantisation parameters *exp, b* and $\alpha$ as shown in Equations (41), (42) and (43):

$$r_{min} = 2^{exp} RND\left(2^{RND(b)-1}(\alpha - 1)\right) \qquad (41)$$

$$r_{max} = 2^{exp} RND\left(2^{RND(b)-1}(\alpha + 1) - 1\right) \qquad (42)$$

$$z = 0 \qquad (43)$$

Where a variable bit length variant of the Q8A fixed point number format is used to represent the input values to the layers of a NN where the zero point z may not be zero the quantisation function performed by a quantisation block may be represented by Equation (44).

$$quant(x, b, exp, \alpha) = 2^{exp}\left(round\left(clamp\left(2^{-exp}x - 2^{q(b-1)}\alpha, -2^{q(b-1)}, (\alpha + 1)2^{q(b-1)} - 1\right)\right) + 2^{q(b-1)}\alpha\right)$$

$$(44)$$

With respect to Equations (40) and (44), while the quantisation parameters of the bit length variant of the Q8A fixed point number format are $r_{min}$, $r_{max}$, z and b, testing has shown that training b, *exp* and $\alpha$ and calculating $r_{min}$, $r_{max}$ and z therefrom has shown to train better.

In some cases, instead of the quantisation blocks quantising the values input thereto to an output fixed point number format defined by one or more quantisation parameters (e.g. in accordance with Equation (36), (37A), (37B), (37C), (40) or (44)), the quantisation blocks may be configured to merely simulate the transformation that the quantisation of an input value represents. It is to be understood that where a quantisation block is described herein as transforming a set of values to a fixed point number format defined by one or more quantisation parameters, said transformation may involve quantising that set of values according to the one or more quantisation parameters, or may involve simulating the quantisation of that set of values by the one or more quantisation parameters.

For example, in some cases, instead of a quantisation block being configured to threshold a weight or an input/activation value to the representable range of the fixed point number format and then round the thresholded activation/weight/bias value to the nearest representable number in the fixed point number format, the quantisation may be simulated by thresholding the weigh/activation values, and adding a random value *u* between -*a* and +*a* to the thresholded activation/weight/bias value and then rounding, where a is half the distance between representable numbers of the fixed point number format (i.e. $\frac{2^{exp}}{2}$). For example, if a fixed point number format has an exponent *exp* of 0, then before rounding the activation/weight/bias value, a random value between -0.5 and +0.5 is added to the thresholded activation/weight/bias value since the distance between representable numbers is 1. Similarly, if a fixed point number format has an exponent of 1, a random value between -1 and +1 is added to the thresholded activation/weight/bias since the distance between representable numbers is 2. In this way the thresholded activation/weight/bias value is rounded up or down to a representable number with a probability proportional to the distance to that representable number. For example, where the exponent *exp* is 0, a thresholded activation/weight/bias value of 4.2 would be rounded to 4 with an 80% probability and to 5 with a 20% probability. Similarly 7.9 would be rounded to 7 with 10% probability and to 8 with 90% probability. In other examples, the ordering of the randomisation and thresholding may be reversed. For example, instead of thresholding an activation/weight/bias value, adding a random value to the threshold activation/weight/bias value and then rounding, a random value may be added to the activation/weight/bias value to generate a randomized weight, the randomized activation/weight/bias value may be thresholded then rounded.

In other cases, instead of a quantisation block being configured to round a thresholded activation/weight/bias value to the nearest representable number, a quantisation block may be configured to simulate the quantisation of the activation/weight/bias values by adding a random value *u* between -*a* and +*a* to the thresholded activation/weight/bias values where, as described above, a is half the distance between representable numbers in the fixed point number format. By simply adding such a random value to the thresholded activation/weight/bias value the thresholded activation/weight/bias value is distorted in a similar manner as rounding the thresholded activation/weight/bias value. In other examples, the ordering of the randomisation and thresholding may be reversed. For example, instead of thresholding an activation/weight/bias value, and adding a random value to the threshold weight, a random value may be added to the activation/weight/bias value to generate a randomized activation/weight/bias value and the randomized activation/weight/bias value may be thresholded.

In yet other cases, instead of a quantisation block rounding a thresholded activation/weight/bias value to the nearest representable number, the quantisation block may be configured to simulate the quantisation by performing gradient averaging quantisation on the thresholded activation/weight/bias value. Performing gradient averaging quantisation on the thresholded activation/weight/bias value may comprise taking the floor of the thresholded activation/weight/bias value and then adding a random value $h$ between 0 and c where c is the distance between representable numbers in the fixed point number format. For example, if the exponent $exp$ of the fixed point number format is 0 then after taking the floor of the thresholded activation/weight/bias value a random value between 0 and 1 is added thereto since the distance between representable numbers in the fixed point number format is 1. Similarly, if the exponent $exp$ of the fixed point number is 1 then after taking the floor of the thresholded activation/weight/bias value a random value between 0 and 2 is added thereto since the distance between representable numbers is 2.

In yet other cases, instead of a quantisation block rounding a thresholded activation/weight/bias value to the nearest representable number, the quantisation block may be configured to simulate the quantisation by performing bimodal quantisation on the thresholded activation/weight/bias value which, as described above, is a combination of round to nearest quantisation and gradient averaging quantisation. Specifically, in bimodal quantisation, gradient averaging quantisation is performed on the thresholded activation/weight/bias value with probability p and rounding quantisation is performed on the thresholded activation/weight/bias value otherwise, where p is twice the distance to the nearest representable value divided by the distance between representable numbers in the fixed point number format. In other examples, the ordering of the bimodal quantisation and thresholding may be reversed. For example, instead of thresholding an activation/weight/bias value, and performing bimodal quantisation on the thresholded activation/weight/bias, bimodal quantisation may be performed on the activation/weight/bias value and thresholding may be performed on the result of the bimodal quantisation.

In other words, the rounding function (*round*) in any of Equations (36), (37A), (37B), (37C), (40) and (44) may be replaced with a function that implements any the simulated rounding methods described above (e.g. the stochastic quantisation method, uniform noise quantisation method, the gradient averaging quantisation method or the bimodal quantisation method).

**Example NN Accelerator**

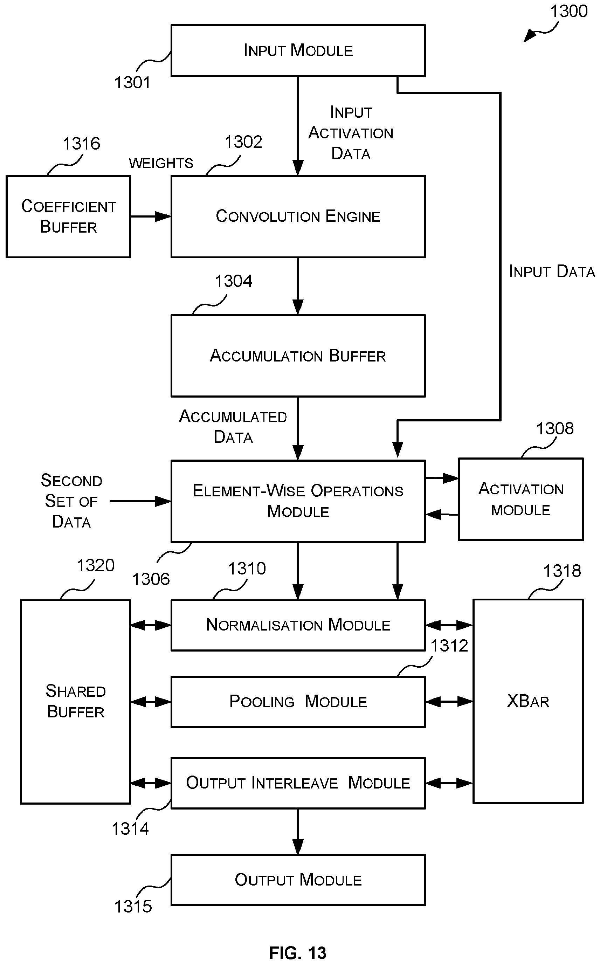

Reference is now made to FIG. 13 which illustrates example hardware logic which can be configured to implement a NN using the quantisation parameters identified in accordance with the method 500 of FIG. 5 or method 1100 of FIG. 11. Specifically FIG. 13 illustrates an example NN accelerator 1300. In an example, the NN accelerator 1300 can be configured to implement a Deep Neural Network (DNN) - which is a type of NN - using the quantisation parameters identified in accordance with the method 500 of FIG. 5 or method 1100 of FIG. 11.

The NN accelerator 1300 of FIG. 13 is configured to compute the output of a NN through a series of hardware passes (which also may be referred to as processing passes) wherein during each pass the NN accelerator receives at least a portion of the input data for a layer of the NN and processes the received input data in accordance with that layer (and optionally in accordance with one or more following layers) to produce processed data. The processed data is either output to memory for use as input data for a subsequent hardware pass or output as the output of the NN. The number of layers that the NN accelerator can process during a single hardware pass may be based on the size of the data, the configuration of the NN accelerator and the order of the layers. For example, where the NN accelerator comprises hardware logic to perform each of the possible layer types a NN that comprises a first convolution layer, a first activation layer, a second convolution layer, a second activation layer, and a pooling layer may be able to receive the initial NN input data and process that input data according to the first convolution layer and the first activation layer in the first hardware pass and then output the output of the activation layer into memory, then in a second hardware pass receive that data from memory as the input and process that data according to the second convolution layer, the second activation layer, and the pooling layer to produce the output data for the NN.

The example NN accelerator 1300 of FIG. 13 comprises an input module 1301, a convolution engine 1302, an accumulation buffer 1304, an element-wise operations module 1306, an activation module 1308, a normalisation module 1310, a pooling module 1312, an output interleave module 1314 and an output module 1315. Each module or engine implements or processes all or a portion of one or more types of layers. Specifically, together the convolution engine 1302 and the accumulation buffer 1304 implement or process a convolution layer or a fully connected layer. The activation module 1308 processes or implements an activation layer. The normalisation module 1310 processes or implements a normalisation layer. The pooling module 1312 implements a pooling layer and the output interleave module 1314 processes or implements an interleave layer.

The input module 1301 is configured to receive the input data to be processed and provides it to a downstream module for processing.

The convolution engine 1302 is configured to perform a convolution operation on the received input activation data using the received input weight data associated with a particular convolution layer. The weights for each convolution layer (which may be generated by the method 1100 of FIG. 11) of the NN may be stored in a coefficient buffer 1316 as shown in FIG. 13 and the weights for a particular convolution layer may be provided to the convolution engine 1302 when that particular convolution layer is being processed by the convolution engine 1302. Where the NN accelerator supports variable weight formats then the convolution engine 1302 may be configured to receive information indicating the format or formats of the weights of the current convolution layer being processed to allow the convolution engine to properly interpret and process the received weights.

The convolution engine 1302 may comprise a plurality of multipliers (e.g. 128) and a plurality of adders which add the result of the multipliers to produce a single sum. Although a single convolution engine 1302 is shown in FIG. 13, in other examples there may be multiple (e.g. 8) convolution engines so that multiple windows can be processed simultaneously. The output of the convolution engine 1302 is fed to the accumulation buffer 1304.

The accumulation buffer 1304 is configured to receive the output of the convolution engine and add it to the current contents of the accumulation buffer 1304. In this manner, the accumulation buffer 1304 accumulates the results of the convolution engine 1302 over several hardware passes of the convolution engine 1302. Although a single accumulation buffer 1304 is shown in FIG. 13, in other examples there may be multiple (e.g. 8, one per convolution engine) accumulation buffers. The accumulation buffer 1304 outputs the accumulated result to the element-wise operations module 1306 which may or may not operate on the accumulated result depending on whether an element-wise layer is to be processed during the current hardware pass.

The element-wise operations module 1306 is configured to receive either the input data for the current hardware pass (e.g. when a convolution layer is not processed in the current hardware pass) or the accumulated result from the accumulation buffer 1304 (e.g. when a convolution layer is processed in the current hardware pass). The element-wise operations module 1306 may either process the received input data or pass the received input data to another module (e.g. the activation module 1308 and/or or the normalisation module 1310) depending on whether an element-wise layer is processed in the current hardware pass and/or depending on whether an activation layer is to be processed prior to an element-wise layer. When the element-wise operations module 1306 is configured to process the received input data the element-wise operations module 1306 performs an element-wise operation on the received data (optionally with another data set (which may be obtained from external memory)). The element-wise operations module 1306 may be configured to perform any suitable element-wise operation such as, but not limited to add, multiply, maximum, and minimum. The result of the element-wise operation is then provided to either the activation module 1308 or the normalisation module 1310 depending on whether an activation layer is to be processed subsequent the element-wise layer or not.

The activation module 1308 is configured to receive one of the following as input data: the original input to the hardware pass (via the element-wise operations module 1306) (e.g. when a convolution layer is not processed in the current hardware pass); the accumulated data (via the element-wise operations module 1306) (e.g. when a convolution layer is processed in the current hardware pass and either an element-wise layer is not processed in the current hardware pass or an element-wise layer is processed in the current hardware pass but follows an activation layer). The activation module 1308 is configured to apply an activation function to the input data and provide the output data back to the element-wise operations module 1306 where it is forwarded to the normalisation module 1310 directly or after the element-wise operations module 1306 processes it. In some cases, the activation function that is applied to the data received by the activation module 1308 may vary per activation layer. In these cases, information specifying one or more properties of an activation function to be applied for each activation layer may be stored (e.g. in memory) and the relevant information for the activation layer processed in a particular hardware pass may be provided to the activation module 1308 during that hardware pass.

In some cases, the activation module 1308 may be configured to store, in entries of a lookup table, data representing the activation function. In these cases, the input data may be used to lookup one or more entries in the lookup table and output values representing the output of the activation function. For example, the activation module 1308 may be configured to calculate the output value by interpolating between two or more entries read from the lookup table.

In some examples, the activation module 1308 may be configured to operate as a Rectified Linear Unit (ReLU) by implementing a ReLU function. In a ReLU function, the output element $y_{i,j,k}$ is calculated by identifying a maximum value as set out in Equation (45) wherein for $x$ values less than 0, $y = 0$:

$$y_{i,j,k} = f\left(x_{i,j,k}\right) = max\{0, x_{i,j,k}\} \quad (45)$$

In other examples, the activation module 1308 may be configured to operate as a Parametric Rectified Linear Unit (PReLU) by implementing a PReLU function. The PReLU function performs a similar operation to the ReLU function. Specifically, where $w_1, w_2, b_1, b_2 \in \mathbb{R}$ are constants, the PReLU is configured to generate an output element $y_{i,j,k}$ as set out in Equation (46):

$$y_{i,j,k} = f\left(x_{i,j,k}; w_1, w_2, b_1, b_2\right) = max\{(w_1 * x_{i,j,k} + b_1), (w_2 * x_{i,j,k} + b_2)\} \quad (46)$$

The normalisation module 1310 is configured to receive one of the following as input data: the original input data for the hardware pass (via the element-wise operations module 1306) (e.g. when a convolution layer is not processed in the current hardware pass and neither an element-wise layer nor an activation layer is processed in the current hardware pass); the accumulation output (via the element-wise operations module 1306) (e.g. when a convolution layer is processed in the current hardware pass and neither an element-wise layer nor an activation layer is processed in the current hardware pass); and the output data of the element-wise operations module and/or the activation module. The normalisation module 1310 then performs a normalisation function on the received input data to produce normalised data. In some cases, the normalisation module 1310 may be configured to perform a Local Response Normalisation (LRN) Function and/or a Local Contrast Normalisation (LCN) Function. However, it will be evident to a person of skill in the art that these are examples only and that the normalisation module 1310 may be configured to implement any suitable normalisation function or functions. Different normalisation layers may be configured to apply different normalisation functions.

The pooling module 1312 may receive the normalised data from the normalisation module 1310 or may receive the input data to the normalisation module 1310 via the normalisation module 1310. In some cases, data may be transferred between the normalisation module 1310 and the pooling module 1312 via an XBar (or "crossbar") 1318. The term "XBar" is used herein to refer to a simple hardware module that contains routing logic which connects multiple modules together in a dynamic fashion. In this example, the XBar may dynamically connect the normalisation module 1310, the pooling module 1312 and/or the output interleave module 1314 depending on which layers will be processed in the current hardware pass. Accordingly, the XBar may receive information each pass indicating which modules 1310, 1312, 1314 are to be connected.

The pooling module 1312 is configured to perform a pooling function, such as, but not limited to, a max or mean function, on the received data to produce pooled data. The purpose of a pooling layer is to reduce the spatial size of the representation to reduce the number of parameters and computation in the network, and hence to also control overfitting. In some examples, the pooling operation is performed over a sliding window that is defined per pooling layer.

The output interleave module 1314 may receive the normalised data from the normalisation module 1310, the input data to the normalisation function (via the normalisation module 1310), or the pooled data from the pooling module 1312. In some cases, the data may be transferred between the normalisation module 1310, the pooling module 1312 and the output interleave module 1314 via an XBar 1318. The output interleave module 1314 is configured to perform a rearrangement operation to produce data that is in a predetermined order. This may comprise sorting and/or transposing the received data. The data generated by the last of the layers is provided to the output module 1315 where it is converted to the desired output format for the current hardware pass.

The normalisation module 1310, the pooling module 1312, and the output interleave module 1314 may each have access to a shared buffer 1320 which can be used by these modules 1310, 1312 and 1314 to write data to and retrieve data from. For example, the shared buffer 1320 may be used by these modules 1310, 1312, 1314 to rearrange the order of the received data or the generated data. For example, one or more of these modules 1310, 1312, 1314 may be configured to write data to the shared buffer 1320 and read the same data out in a different order. In some cases, although each of the normalisation module 1310, the pooling module 1312 and the output interleave module 1314 have access to the shared buffer 1320, each of the normalisation module 1310, the pooling module 1312 and the output interleave module 1314 may be allotted a portion of the shared buffer 1320 which only they can access. In these cases, each of the normalisation module 1310, the pooling module 1312 and the output interleave module 1314 may only be able to read data out of the shared buffer 1320 that they have written into the shared buffer 1320.

The modules of the NN accelerator 1300 that are used or active during any hardware pass are based on the layers that are processed during that hardware pass. In particular, only the modules or components related to the layers processed during the current hardware pass are used or active. As described above, the layers that are processed during a particular hardware pass is determined (typically in advance, by, for example, a software tool) based on the order of the layers in the NN and optionally one or more other factors (such as the size of the data). For example, in some cases the NN accelerator may be configured to perform the processing of a single layer per hardware pass unless multiple layers can be processed without writing data to memory between layers. For example, if a first convolution layer is immediately followed by a second convolution layer each of the convolution layers would have to be performed in a separate hardware pass as the output data from the first hardware convolution needs to be written out to memory before it can be used as an input to the second. In each of these hardware passes only the modules, components or engines relevant to a convolution layer, such as the convolution engine 1302 and the accumulation buffer 1304, may be used or active.

Although the NN accelerator 1300 of FIG. 13 illustrates a particular order in which the modules, engines etc. are arranged and thus how the processing of data flows through the NN accelerator, it will be appreciated that this is an example only and that in other examples the modules, engines may be arranged in a different manner. Furthermore, other hardware logic (e.g. other NN accelerators) may implement additional or alternative types of NN layers and thus may comprise different modules, engines etc.

**Alternative cost metric**

In examples where the thresholding step described herein is implemented in accordance with the definition of *clamp(x, low, high)* in Equation (33), inputs *x* (e.g. where the input *x* is dependent on a weight value w, such as $x = w$ or $x = 2^{-e}w$) that are clamped to either *low* or *high* can generate an output that is not dependent on *x* (e.g. and so not dependent on w, in examples where the input *x* is dependent on a weight value w). For example, where *low* is the minimum or lowest representable number in the fixed point number format defined by *b* and *exp* (e.g. $low = -2^{b-exp-1}$) and *high* is the maximum or highest representable number in the fixed point number format defined by *b* and *exp* (e.g. $high = 2^{b+exp-1} - 2^{exp}$). This is because, in this example, neither *low,* nor *high,* depend on *x* (e.g. and so also do not dependent on *w*). In these examples, it is not possible to back-propagate a non-zero gradient of the cost metric with respect to *x* (e.g. orw) to those clamped values via the equations used in the thresholding step, meaning that it may not be possible to usefully adjust input weight values that are clamped during the thresholding step. In other words, in these examples, when performing the method described herein with reference to FIG. 11, it may be that only weight values that have not been clamped during the thresholding step can have a non-zero gradient back-propagated thereto via the equations used in the thresholding step and so only those weight values that can be usefully adjusted in blocks 1102 and 1104, respectively.

To address this, and other examples in which the definitions of *low* and *high* used in the thresholding step do not depend on *x* (e.g. and so also do not dependent on w) meaning that it is not possible to back-propagate a non-zero gradient of the cost metric with respect to *x* (e.g. orw) to clamped values via the equations used in that thresholding step, an alternative cost metric (e.g. loss function) can be used in block 504. An example of the alternative cost metric is shown in Equation (47). The main difference between Equation (3) and Equation (47) is the introduction of a further term - ($\gamma * tm$). The further term includes a "thresholding metric", *tm*, and a weight, $\gamma$, applied to that thresholding metric. That is, the cost metric may be a combination of (e.g. a weighted sum of) an error metric *em*, an implementation metric *sm* and a thresholding metric *tm*.

$$cm = (\alpha * em) + (\beta * sm) + (\gamma * tm) \qquad (47)$$

The purpose of the thresholding metric *tm* can be to assign a cost to the thresholding of input values during quantisation. This means that, when minimised as part of the cost metric cm, the thresholding metric *tm* acts to reduce the number of input values that are clamped during a thresholding step - e.g. by adjusting the clamped input values, and/or the *low* and/or *high* thresholds used during the thresholding step. For example, the thresholding metric, *tm*, for the NN can be formed by summing the "thresholding cost" $t_l$ of a plurality of layers *l* of the NN as determined in accordance with Equation (48) - in which $x_i$ is dependent on the *ith* weight, $w_i$, e.g. $x_i = 2^{-e}w_i$ and *N* is the number of weights in the layer.

$$t_l = \frac{1}{N} \sum_{i=1}^{N} (\max(0, low - x_i) + \max(0, x_i - high))$$

$$(48)$$

In Equation (48), the contribution of a weight value $w_i$ to the thresholding cost $t_l$ is only non-zero for weight values that are outside of the representable range in the fixed point number format (i.e. weight values that are less than *low* or greater than *high* and so will be clamped to either *low* or *high* in the thresholding step). This is because, for example, if the weight value is in the representable range (e.g. greater than *low* and less than *high*) both of the "max" functions in Equation (48) will return "0". Hence, minimising the thresholding metric acts to "push" weight values $w_i$ that are clamped during the thresholding step, towards the range of numbers representable by the fixed point number format, and "pull" the respective *low* or *high* threshold to which those weight values $w_i$ were clamped towards those weight

values $w_i$. In other words, minimising the thresholding metric drives the weight values $w_i$, and *low* and *high* thresholds, towards values that lead to the "max" functions in Equation (48) returning "0" more often (i.e. by virtue of more of the weight values $w_i$ being within the representable range). Put another way, this means that, during back-propagation and adjustment, a weight value $w_i$ is either influenced by the error metric *em* and the implementation metric *sm* (e.g. if that weight value $w_i$ is within the representable range, and so not clamped to *low* or *high*), or by the thresholding metric *tm* (e.g. if that weight value $w_i$ is outside of the representable range, and so clamped to *low* or *high*). When a weight value $w_i$ is influenced by the thresholding metric *tm* it is "*pushed*" back towards the range of representable values where it can be influenced by the error metric *em* and the implementation metric *sm*.

FIG. 14 illustrates various components of an exemplary general purpose computing-based device 1400 which may be implemented as any form of a computing and/or electronic device, and in which embodiments of the methods 500, 1100 of FIGS. 5 and 10 described above may be implemented.

Computing-based device 1400 comprises one or more processors 1402 which may be microprocessors, controllers or any other suitable type of processors for processing computer executable instructions to control the operation of the device in order to assess the performance of an integrated circuit defined by a hardware design in completing a task. In some examples, for example where a system on a chip architecture is used, the processors 1402 may include one or more fixed function blocks (also referred to as accelerators) which implement a part of the method of determining the fixed point number format for representing a set of values input to, or output from, a layer of a NN in hardware (rather than software or firmware). Platform software comprising an operating system 1404 or any other suitable platform software may be provided at the computing-based device to enable application software, such as computer executable code 1405 for implementing one or more of the methods 500, 1100 of FIGS. 5 and 10, to be executed on the device.

The computer executable instructions may be provided using any computer-readable media that is accessible by computing based device 1400. Computer-readable media may include, for example, computer storage media such as memory 1406 and communications media. Computer storage media (i.e. non-transitory machine readable media), such as memory 1406, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (i.e. non-transitory machine readable media, e.g. memory 1406) is shown within the computing-based device 1400 it will be appreciated that the storage may be distributed or located remotely and accessed via a network or other communication link (e.g. using communication interface 1408).

The computing-based device 1400 also comprises an input/output controller 1410 arranged to output display information to a display device 1412 which may be separate from or integral to the computing-based device 1400. The display information may provide a graphical user interface. The input/output controller 1410 is also arranged to receive and process input from one or more devices, such as a user input device 1414 (e.g. a mouse or a keyboard). In an embodiment the display device 1412 may also act as the user input device 1414 if it is a touch sensitive display device. The input/output controller 1410 may also output data to devices other than the display device, e.g. a locally connected printing device (not shown in FIG. 14).

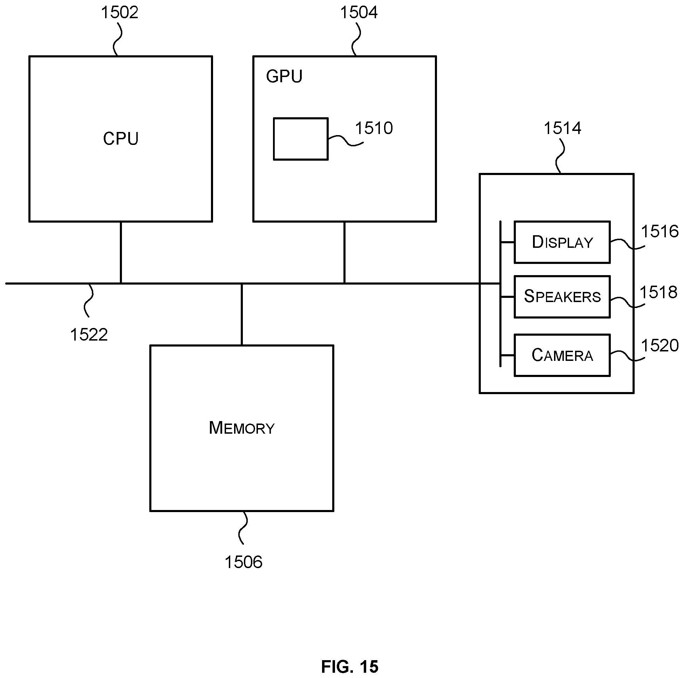

FIG. 15 shows a computer system in which the hardware logic (e.g. NN accelerator) configurable to implement a NN described herein may be implemented. The computer system comprises a CPU 1502, a GPU 1504, a memory 1506 and other devices 1514, such as a display 1516, speakers 1518 and a camera 1520. Hardware logic configurable to implement a NN 1510 (e.g. the NN accelerator 1300 of FIG. 13) may be implemented on the GPU 1504, as shown in FIG. 15. The components of the computer system can communicate with each other via a communications bus 1522. In other examples, the hardware logic configurable to implement a NN 1510 may be implemented independent from the CPU or the GPU and may have a separate connection to the communications bus 1522. In some examples, there may not be a GPU and the CPU may provide control information to the hardware logic configurable to implement a NN 1510.

The NN accelerator 1300 of FIG. 13 is shown as comprising a number of functional blocks. This is schematic only and is not intended to define a strict division between different logic elements of such entities. Each functional block may be provided in any suitable manner. It is to be understood that intermediate values described herein as being formed by a NN accelerator or a processing module need not be physically generated by the NN accelerator or the processing module at any point and may merely represent logical values which conveniently describe the processing performed by the NN accelerator or the processing module between its input and output.

The hardware logic configurable to implement a NN (e.g. the NN accelerator 1300 of FIG. 13) described herein may be embodied in hardware on an integrated circuit. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture hardware logic configurable to implement a NN (e.g. NN accelerator) described herein. An integrated circuit definition dataset may be, for example, an integrated circuit description.

Therefore, there may be provided a method of manufacturing, at an integrated circuit manufacturing system, hardware logic configurable to implement a NN (e.g. NN accelerator 1300 of FIG. 13) as described herein. Furthermore, there may be provided an integrated circuit definition dataset that, when processed in an integrated circuit manufacturing system, causes the method of manufacturing hardware logic configurable to implement a NN (e.g. NN accelerator 1300 of FIG. 13) to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

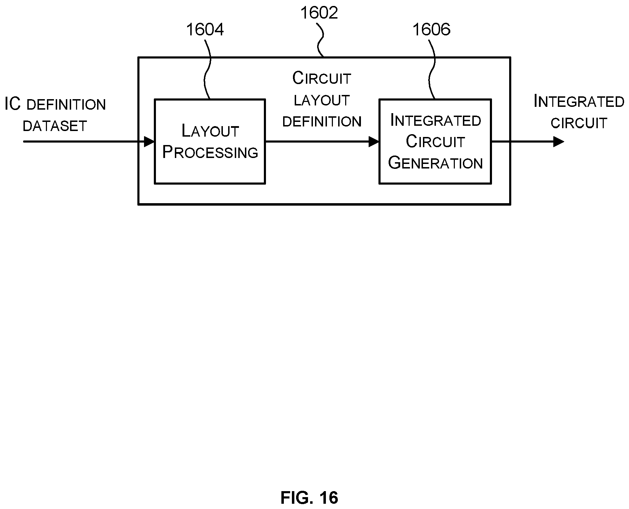

An example of processing an integrated circuit definition dataset at an integrated circuit manufacturing system so as to configure the system to manufacture hardware logic configurable to implement a NN (e.g. NN accelerator) will now be described with respect to FIG. 16.

FIG. 16 shows an example of an integrated circuit (IC) manufacturing system 1602 which is configured to manufacture hardware logic configurable to implement a NN (e.g. NN accelerator) as described in any of the examples herein. In particular, the IC manufacturing system 1602 comprises a layout processing system 1604 and an integrated circuit generation system 1606. The IC manufacturing system 1602 is configured to receive an IC definition dataset (e.g. defining hardware logic configurable to implement a NN (e.g. NN accelerator) as described in any of the examples herein), process the IC definition dataset, and generate an IC according to the IC definition dataset (e.g. which embodies hardware logic configurable to implement a NN (e.g. NN accelerator) as described in any of the examples herein). The processing of the IC definition dataset configures the IC manufacturing system 1602 to manufacture an integrated circuit embodying hardware logic configurable to implement a NN (e.g. NN accelerator) as described in any of the examples herein.

The layout processing system 1604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1604 has determined the circuit layout it may output a circuit layout definition to the IC generation system 1606. A circuit layout definition may be, for example, a circuit layout description.

The IC generation system 1606 generates an IC according to the circuit layout definition, as is known in the art. For example, the IC generation system 1606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1606 may be in the form of computer-readable code which the IC generation system 1606 can use to form a suitable mask for use in generating an IC.

The different processes performed by the IC manufacturing system 1602 may be implemented all in one location, e.g. by one party. Alternatively, the IC manufacturing system 1602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture hardware logic configurable to implement a NN (e.g. NN accelerator) without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 16 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 16, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A computer-implemented method of identifying one or more quantisation parameters for transforming values to be processed by a Neural Network "NN" for implementing the NN in hardware, the method comprising, in at least one processor:

   (a) determining an output of a model of the NN in response to training data, the model of the NN comprising one or more quantisation blocks, each of the one or more quantisation blocks being configured to transform one or more sets of values input to a layer of the NN to a respective fixed point number format defined by one or more quantisation parameters prior to the model processing that one or more sets of values in accordance with the layer;
   (b) determining a cost metric of the NN that is a combination of an error metric and an implementation metric, the implementation metric being representative of an implementation cost of the NN based on the one or more quantisation parameters according to which the one or more sets of values have been transformed, the implementation metric being dependent on, for each of a plurality of layers of the NN:

   a first contribution representative of an implementation cost of an output from that layer; and
   a second contribution representative of an implementation cost of an output from a layer preceding that layer;

   (c) back-propagating a derivative of the cost metric to at least one of the one or more quantisation parameters to generate a gradient of the cost metric for the at least one of the one or more quantisation parameters; and
   (d) adjusting the at least one of the one or more quantisation parameters based on the gradient for the at least one of the one or more quantisation parameters.

2. The computer-implemented method of claim 1, further comprising, subsequent to the adjusting step (d), removing a set of values from the model of the NN in dependence on the adjusted at least one of the one or more quantisation parameters.

3. The computer-implemented method of claim 1 or 2, wherein the first contribution is formed in dependence on an implementation cost of one or more output channels of weight data input to the layer, and the second contribution is formed in dependence on an implementation cost of one or more input channels of weight data input to the layer.

4. The computer-implemented method of claim 1, 2 or 3, wherein each of the one or more quantisation parameters includes a respective bit width, and wherein each of the one or more sets of values is a channel of values input to the layer, the method comprising determining a respective bit width for each of one or more input channels of weight data input to the layer and determining a respective bit width for each of one or more output channels of weight data input to the layer.

5. The computer-implemented method of claim 4, wherein a first bit width and a second bit width is determined, respectively, for each weight value input to the layer, and the method comprises transforming each weight value input to the layer according to its respective first and/or second bit width, optionally the smaller of its respective first and second bit widths.

6. The computer-implemented method of claim 4 or 5, the method comprising, subsequent to the adjusting step (d), removing from the model of the NN an output channel of the weight data input to the preceding layer when the adjusted bit width for a corresponding input channel of the weight data input to the layer is zero.

7. The computer-implemented method of claim 1 or 2, wherein the first contribution is formed in dependence on an implementation cost of one or more output channels of weight data input to the layer, and the second contribution is formed in dependence on an implementation cost of one or more output channels of weight data input to the preceding layer.

8. The computer-implemented method of claim 1, 2 or 7, wherein each of the one or more quantisation parameters includes a respective bit width, and wherein the one or more sets of values include one or more output channels of weight data input to the layer and one or more output channels of weight data input to the preceding layer, the method comprising transforming each of the one or more output channels of weight data input to the layer according to a respective bit width, and transforming each of the one or more output channels of weight data input to the preceding layer according to a respective bit width.

9. The computer-implemented method of claim 8, the method comprising, subsequent to the adjusting step (d), removing from the model of the NN an output channel of the weight data input to the preceding layer when the adjusted bit width for that output channel is zero.

10. The computer-implemented method of claims 7 or 8, wherein the implementation metric is further dependent on, for each of a plurality of layers of the NN, a further contribution representative of an implementation cost of one or more biases input to the preceding layer.

11. The computer-implemented method of claim 10, the method comprising, subsequent to the adjusting step (d), removing from the model of the NN an output channel of the weight data input to the preceding layer when the adjusted bit width for that output channel and the absolute value of its associated bias is zero.

12. The computer-implemented method of any preceding claim, wherein the second contribution is representative of an implementation cost of an output from a layer immediately preceding that layer.

13. The computer-implemented method of any preceding claim, further comprising:

   outputting the adjusted the at least one of the one or more quantisation parameters for use in configuring hardware logic to implement the NN; and/or
   configuring hardware logic to implement the NN using the adjusted quantisation parameters, optionally wherein the hardware logic comprises a neural network accelerator.

14. A computer readable storage medium having stored thereon computer readable instructions that, when executed at a computer system, cause the computer system to perform the method of any of claims 1 to 13.

15. A computing-based device configured to identify one or more quantisation parameters for transforming values to be processed by a Neural Network "NN" for implementing the NN in hardware, the computing-based device comprising:

   at least one processor; and
   memory coupled to the at least one processor, the memory comprising:
   computer readable code that when executed by the at least one processor causes the at least one processor to:

      (a) determine an output of a model of the NN in response to training data, the model of the NN comprising one or more quantisation blocks, each of the one or more quantisation blocks being configured to transform one or more sets of values input to a layer of the NN to a respective fixed point number format defined by one or more quantisation parameters prior to the model processing that one or more sets of values in accordance with the layer;
      (b) determine a cost metric of the NN that is a combination of an error metric and an implementation metric, the implementation metric being representative of an implementation cost of the NN based on the one or more quantisation parameters according to which the one or more sets of values have been transformed, the implementation metric being dependent on, for each of a plurality of layers of the NN:

         a first contribution representative of an implementation cost of an output from that layer; and
         a second contribution representative of an implementation cost of an output from a layer preceding that layer;

      (c) back-propagate a derivative of the cost metric to at least one of the one or more quantisation parameters to generate a gradient of the cost metric for the at least one of the one or more quantisation parameters; and
      (d) adjust the at least one of the one or more quantisation parameters based on the gradient for the at least one of the one or more quantisation parameters.

FIG. 1

**FIG. 2A**

**FIG. 3**

FIG. 2B

FIG. 4

500

DETERMINE OUTPUT OF MODEL OF NN
WITH QUANTISATION BLOCKS IN
RESPONSE TO TRAINING DATA
502

DETERMINE COST METRIC FOR
QUANTISATION PARAMETERS FROM
OUTPUT OF MODEL AND IMPLEMENTATION
COST OF NN
504

BACK-PROPAGATE DERIVATIVE OF COST
METRIC TO QUANTISATION PARAMETERS
TO GENERATE GRADIENTS FOR
QUANTISATION PARAMETERS
506

ADJUST QUANTISATION PARAMETERS
BASED ON GRADIENTS
508

REMOVE SETS OF VALUES IN RESPONSE
TO QUANTISATION PARAMETERS BEING
ADJUSTED TO ZERO
509

YES

REPEAT?
510

NO

OUTPUT QUANTISATION PARAMETERS
512

CONFIGURE HARDWARE LOGIC TO
IMPLEMENT NN USING QUANTISATION
PARAMETERS
514

FIG. 5

FIG. 6

600

TRAINING DATA → QUANTISING MODEL OF NN → OUTPUT → ERROR CALCUATION → OUTPUT ERROR

TRAINING DATA → FLOATING POINT MODEL OF NN → BASELINE OUTPUT → ERROR CALCUATION

FIG. 7

700

TRAINING DATA → QUANTISING MODEL OF NN → OUTPUT → ERROR CALCUATION → OUTPUT ERROR

CORRECT CLASSIFICATIONS/ LABELS →

**FIG. 8**

**FIG. 9**

**FIG. 10A**

1020

OPERATING ON ACTIVATION DATA INPUT
TO A LAYER SUCH THAT THE OUTPUT DATA
FOR THE LAYER DOES NOT INCLUDE AN
IDENTIFIED CHANNEL

1022

INSERTING A REPLACEMENT CHANNEL
INTO THE OUTPUT DATA FOR THE LAYER
IN LIEU OF THE IDENTIFIED CHANNEL

1024

**FIG. 10B**

1012

1020

1018

LAYER E

+

LAYER G

LAYER F

1016

**FIG. 10C**

1032

LAYER T

1038

LAYER U

LAYER V

1036

**FIG. 10D**

1032

LAYER T

1038

LAYER U

LAYER X

LAYER V

1034

1036

**FIG. 10E**

FIG. 11

FIG. 12

1300

INPUT MODULE

1301

1316

WEIGHTS

1302

COEFFICIENT
BUFFER

INPUT
ACTIVATION
DATA

CONVOLUTION ENGINE

INPUT DATA

1304

ACCUMULATION BUFFER

ACCUMULATED
DATA

SECOND
SET OF
DATA

1308

ELEMENT-WISE OPERATIONS
MODULE

ACTIVATION
MODULE

1320

1306

1310

1318

SHARED
BUFFER

NORMALISATION MODULE

1312

POOLING MODULE

XBAR

OUTPUT INTERLEAVE MODULE

1314

OUTPUT MODULE

1315

**FIG. 13**

**FIG. 14**

**FIG. 15**

FIG. 16

## EUROPEAN SEARCH REPORT

Europäisches
Patentamt
European
Patent Office
Office européen
des brevets

**Application Number**

EP 23 18 2504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YING ET AL: "Differentiable Joint Pruning and Quantization for Hardware Efficiency", 23 August 2020 (2020-08-23), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 259 – 277, XP047591569, * the whole document * | 1-15 | INV. G06N3/0464 G06N3/048 G06N3/0495 G06N3/084 |

TECHNICAL FIELDS
SEARCHED       (IPC)

G06N

The present search report has been drawn up for all claims

| Place of search | Date of completion of the search | Examiner |
|---|---|---|
| The Hague | 27 November 2023 | Baldan, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................................
& : member of the same patent family, corresponding
document

EPO FORM 1503 03.82 (P04C01)

**EP 4 303 770 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2209612 A
- GB 2216948 A
- GB 2209616 A
- GB 2216947 A